# EUROPEAN PATENT SPECIFICATION

(11) **EP 0 708 143 B1**
(45) Date of publication and mention of the grant of the patent: **05.01.2000**
(21) Application number: 94116469.1
(22) Date of filing: 19.10.1994
(51) Int. Cl.: C08L 27/06, C08L 51/00, C08L 27/24

(54) **Polyvinyl chloride based resin composition and products derived therefrom**
Kunststoffzusammensetzung auf Basis von Polyvinylchlorid und daraus abgeleitete Produkte
Composition de résine basée polychlorure de vinyle et produits dérivés de celle-ci

(43) Date of publication of application: 24.04.1996
(73) Proprietor: SEKISUI AMERICA CORPORATION, New York 10103 (US)
(72) Inventor: Kato, Masaharu, Shinnanyo, Yamaguchi 746 (JP); Omoto, Masanobu, Tokuyama, Yamaguchi 745 (JP); Ishimatsu, Hirofumi, Bloomsburg, PA 17815 (US); Medalie, James, Bloomsburg, PA 17815 (US); Kratzer, Jeff A., Catawissa, PA 17820 (US)
(74) Representative: Rauh, Helga

(56) References cited:
- EP-A- 0 326 041
- EP-A- 0 349 845
- EP-A- 0 568 922
- DATABASE WPI Week 7617, Derwent Publications Ltd., London, GB; AN 76-30919X & JP-A-51 028 851 (MITSUBISHI MONSANTO) 12 March 1976

## Description

### BACKGROUND OF THE PRESENT INVENTION

This invention relates to a resin composition. More specifically, this invention is directed to a blended polyvinyl chloride based resin composition (hereinafter referred to as "blended resin composition") and moldings including products derived therefrom by thermoforming. Products made from the blended resin composition of the present invention are superior flame and smoke retardants. Such products also generate fewer toxic fumes such as hydrogen chloride. Products encompassing the blended resin composition of the present invention also exhibit superior impact resistance and vacuum moldability. As such, these products are well suited for use as building materials and as aircraft components such as panels and toilet seats.

As plastics replace other construction and building materials, due in part, to their superior moldability, low cost and low weight, there is a corresponding risk regarding their use. This risk is created by toxic gases produced when plastics are exposed to high temperatures.

Prior art materials such as wood and brick, albeit safer than plastics in a fire, are not as versatile and durable as plastics. Generally, plastics comprise elements of carbon and hydrogen as their main constituents. As such, many plastics are extremely flammable. Intense heat can melt the plastic, which upon burning can produce harmless by products, or in some case, produce excessive choking black smoke, toxic fumes and numerous explosive vapors.

Various vinyl chloride based resins are commercially available but almost all of them are inferior in either heat resistance or impact resistance. Most conventional vinyl chloride based resins produce excessive hydrogen chloride fumes upon burning. Hydrogen chloride gas is considered toxic and is harmful to humans.

It is noted that conventional vinyl chloride based resins possess desirable properties such as excellent moldability, mechanical strength, and resistance to chemicals. Conventional vinyl chloride based resins are extensively used for manufacturing pipes, boards, sheets, and films, among other objects. Compared to polyethylene, conventional vinyl chloride based resins exhibit increased heat-tolerance and high temperature flame resistance. These properties are imparted by the chlorine element.

Notwithstanding the aforementioned heat resistance properties, conventional vinyl chloride based resins are well known for generating hydrogen chloride and other chlorine containing fumes which are hazardous to human health. Accordingly, conventional vinyl chloride based resins are not suited for use inside buildings, as building materials or as materials for use inside automobiles, trains, and aircraft.

The aforementioned drawbacks have created a need for an improved vinyl chloride based resin which, while maintaining its superior heat, smoke and flame retarding properties, including its superior moldability, improved mechanical strength and increased chemical resistance, does not generate noxious fumes such as hydrogen chloride.

With a view towards overcoming such drawbacks, it is desirable to add additives such as flame-retarding agents, smoke-reducing agents, and the like, to conventional vinyl chloride based resins which would diminish the harmful drawbacks associated with the use of such resins.

Many attempts have been proposed to overcome the aforementioned drawbacks but the proposed improvements have been insufficient.

Japanese Laid Open Patent Publication No. 2-258857, discloses a flame-resisting vinyl chloride resin composition consisting essentially of vinyl chloride resin, one of antimony tetroxide or antimony pentoxide, an oxide or a hydroxide of an alkaline earth metal such as magnesium hydroxide, calcium hydroxide, magnesium oxide, and calcium oxide.

Japanese Laid-open Patent Publication No. 2-251552, in turn, discloses a flame-resisting resin composed of a vinyl chloride based resin and a zinc borate. The zinc borate is characterized by a surface which is covered by an oxide of one of an antimony or molybdenum.

Similarly, Japanese Laid-open Patent Publication No. 3-152143 attempts to overcome the aforementioned drawbacks, by disclosing a flame-resisting resin composed of a vinyl chloride based resin, a bromo-epoxy compound, and antimony oxide.

In Japanese Laid-open Patent Publication No. 4-65448, there is disclosed a flame-resisting vinyl chloride based resin composition consisting essentially of vinyl chloride based resin, a plasticizer exemplified by monoalkyl diaryl phosphate, and a flame retarding agent such as hydrotalcite.

The use of calcium carbonate in conjunction with vinyl chloride has been shown to reduce generation of toxic fumes such as hydrogen chloride, which are produced when the vinyl chloride resin begins to burn.

A brief review of the prior art seems to suggest that addition of various elements such as flame-retarding agents or smoke-reducing agents to a vinyl chloride based resin reduces the amount of toxic fumes produced from products derived from conventional vinyl chloride based resins. Additionally, such prior art vinyl chloride based resins seem to impart heat resistance to products derived from these resins.

However, such resins frequently suffer from the disadvantage of being mechanically weak. In particular, such resins have low impact-resistance and thus break easily.

In order to improve impact-resistance of prior art vinyl chloride based resins, addition of impact-modifiers to the starting material has been proposed. U.S. Patent No. 3,862,264, attempts to increase impact resistance of vinyl chloride based resins by the addition of graft copolymers. Such graft copolymers are prepared by graft polymerizing butadiene with styrene-methyl methacrylate copolymer. The resulting graft polymer is then added to a chlorinated vinyl chloride resin.

Similarly, U.S. Patent 3,644,589, discloses a method of imparting self-extinguishing flame properties to impact-modified polyvinyl chloride. This is achieved by reacting vinyl chloride resin, impact-modifier, dibutyl tin oxide, and 3-mercaptopropionic acid. Here, acrylic resin, chlorinated polyethylene, ABS resin and the like are described as impact-modifiers.

Other studies disclose that addition of elements such as flame-retarding agents, smoke-reducing agents, and impact-modifiers to vinyl chloride based resins with a view towards improving flame-resistance, impact-resistance and inhibiting production of toxic gases such as hydrogen chloride from products derived from prior art vinyl chloride resins.

However, such studies have indicated that addition of such compounds does not impart sufficient properties to prior art vinyl chloride resins and products derived therefrom.

In light of the failed attempts in producing superior resins and products derived therefrom, the United States Government has implemented generally loose standards for articles and products manufactured from conventional vinyl resin compositions.

An example of the loose standards governing use of prior art vinyl chloride resin and products derived therefrom is exemplified by various regulations concerning flame-resistance articles for use inside aircraft. Attention is called to U.S. FAR (Federal Aviation Regulation) 25.853(a-1) through Amendment 55-56 and FAR 121.132 through Amendment 121-198.

A review of the above-noted standards makes clear that articles and products manufactured from prior art vinyl chloride based resins are lacking in superior properties such as heat resistance, flame-resistance, and impact-resistance. The current standards governing use of articles manufactured from prior art vinyl chloride based resins are enumerated below:
(1) Heat Generation:
   Heat released in 5 minutes: below 65 KW/m²
   Rate of Heat Release in 2 minutes: below 65 KW/min/m²
(2) Smoke Generation
   Specific Optical Density (Ds) in 4 minutes: ⁴Dₘ below 200

In view of the foregoing, it would be a distinct advantage to produce a blended resin composition which overcomes the aforementioned drawbacks associated with prior art vinyl chloride based resins and products derived therefrom.

### OBJECTS AND SUMMARY OF THE INVENTION

It is an object of this invention to provide a vinyl chloride based resin composition which overcomes the drawbacks of the prior art.

It is a further object of this invention to provide a vinyl chloride based resin which, upon burning generates substantially less smoke which includes toxic fumes such as hydrogen chloride.

It is a further object of the present invention to provide moldings and products derived therefrom containing the blended resin composition of the present invention.

It is a further object of this invention to provide moldings and products therefrom which are superior flame and smoke retardants, exhibit improved heat and impact resistance and generate substantially less smoke and toxic fumes such as hydrogen chloride during combustion.

It is a further object of this invention to provide moldings and products derived which are well suited for use inside aircraft.

Briefly stated, the present invention provides a blended resin composition containing 100 parts by weight of a vinyl chloride resin which has a chlorine content of from 50 to 73 percent by weight, from 5 to 120 parts by weight of a flame-retarding agent and from 1 to 30 parts by weight of a graft polymer. The blended resin composition and products derived therefrom exhibit improved flame-retarding and heat tolerance properties. The blended resin composition and its products also exhibit improved vacuum moldability and increased impact resistance. In particular, the blended resin composition and its products emit substantially less smoke and less toxic and noxious fumes such as hydrogen chloride. A method to produce the blended resin composition including a method of processing moldings by thermoforming is also disclosed.

According to the invention, there is provided a blended resin composition which includes of 100 parts by weight of a vinyl chloride resin having a chlorine content of from 50 to 73 percent by weight, together with from 5 to 120 parts by weight of at least one flame-retarding agent selected from the group consisting of magnesium hydroxide, hydrotalcite, antimony oxides, molybdenum compounds, and bromine compounds, and from 1 to 30 parts by weight of a graft polymer, wherein the graft polymer being formed by polymerizing from 10 to 95 parts by weight of a composite rubber and from 90 to 5 parts by weight of a vinyl based monomer, whereby said composite rubber contains from 1 to 50 percent by weight of a polyorganosiloxane rubber and from 99 to 50 percent by weight of at least one rubber selected from the group consisting of polyalkyl acrylate rubber and polyalkyl methacrylate rubber.

The blended resin includes one of a vinyl chloride resin, a copolymer formed of a vinyl chloride and a monomer capable of copolymerizing with said vinyl chloride, and a graft polymer formed from a polymer wherein said vinyl chloride is graft polymerized.

According to another embodiment of the present invention, there is provided a blended resin composition which includes a blend of 100 parts by weight of a vinyl chloride resin having a chlorine content of from 50 to 73 percent by weight where the vinyl chloride resin is at least one member selected from the group consisting of a vinyl chloride resin, a copolymer formed of a vinyl chloride and a monomer capable of copolymerizing with said vinyl chloride, and a graft polymer formed from a polymer wherein said vinyl chloride is graft polymerized together with from 5 to 12 parts by weight of at least one flame-retarding agent selected from the group consisting of magnesium hydroxide, hydrotalcite, antimony oxides, molybdenum compounds, and bromine compounds, from 1 to 30 parts by weight of a graft polymer, wherein the graft polymer is formed by polymerizing from 10 to 95 parts by weight of a composite rubber and from 90 to 5 parts by weight of a vinyl based monomer.

The blended resin composition further includes no more than 30 parts by weight of at least one impact-modifier selected from the group consisting of a chlorinated polyethylene having a degree of chlorination of from 25 to 45 percent by weight, a MBS resin, an ABS resin, a NBR, an acrylate-based impact-modifier, an ethylene-vinyl acetate copolymer, an ethylene-vinyl acetate-carbon monoxide copolymer, an ethylene-alkyl acrylate-carbon monoxide copolymer, and an ethylene-alkyl methacrylate-carbon monoxide copolymer.

According to a feature of the present invention, products derived from the blended resin composition of the present invention are well suited for use as aircraft components.

The above, and other objects, feature and advantages of the present invention will become apparent from the following description.

### DETAILED DESCRIPTION OF THE PREFERRED EMBODIMENT

The blended resin composition according to the present invention includes at least one vinyl chloride based resin, at least one flame-retarding agent and at least one graft polymer. The blended resin composition is composed of 100 parts by weight of a vinyl chloride based resin, from 5 to 120 parts by weight of a flame retarding agent, and from 1 to 30 parts by weight of a graft polymer. The vinyl chloride of the blended resin composition includes from 50 to 73 parts by weight of chlorine.

The preferred blended resin composition exhibiting superior flame-retarding, heat-tolerance and impact resistance properties of the present invention is composed of the following elements, described hereinafter.

### Vinyl chloride based resin

The blended resin composition of the present invention includes, in the starting material, at least one of a vinyl chloride resin, a copolymer formed of a vinyl chloride and a monomer which can copolymerize with vinyl chloride, a graft polymer formed from a polymer in which a vinyl chloride is graft polymerized, and a post-chlorinated form of the preceding resin.

The vinyl chloride based resin is preferably selected from the group consisting of a vinyl chloride resin, a ethylene-vinyl chloride copolymer (weight ratio 1:99 to 10:90), a vinyl chloride graft polymer of a ethylene-vinyl acetate copolymer (weight ratio 97:2:1 to 55:25:20), including respective post-chlorinated forms.

Each of the above compounds can be used alone or in combination with one or more of the aforementioned compounds.

The monomer capable of copolymerizing the abovementioned vinyl chloride need not be limited to any specific type. It can include, among others, any one or more of the following: an α-olefin such as ethylene, propylene, and butylene, a vinyl ester such as vinyl acetate and vinyl propionate, a vinyl ether such as butyl vinyl ether and cetyl vinyl ether, an acrylate such as methyl acrylate and ethyl acrylate, a methacrylate such as methyl methacrylate and ethyl methacrylate, an aromatic vinyl compound such as styrene and α-methyl styrene, a halovinyl compound such as vinylidene chloride and vinyl fluoride, and a N-substituted maleimide such as N-phenyl maleimide and N-cyclohexyl maleimide.

The aforementioned polymer which is capable of graft polymerizing vinyl chloride, need not be limited to a specific type. Such a polymer includes at least one of an ethylene-vinyl acetate copolymer, an ethylene-vinyl acetate-carbon monoxide copolymer, an ethylene-methyl methacrylate copolymer, an ethylene-propylene copolymer, an ethylene-ethyl acrylate copolymer, an ethylene-butyl acrylate-carbon monoxide copolymer, an acrylonitrile-butadiene copolymer, a polyurethane, a chlorinated polyethylene, and a chlorinated polypropylene.

Ethylene-vinyl chloride copolymer is the preferred copolymer for use in this invention. Flame-retarding and heat-tolerance properties of the ethylene-vinyl chloride copolymer substantially decrease when the content of ethylene in the copolymer increases. As such, the preferred ratio of ethylene to vinyl chloride in the ethylene-vinyl chloride copolymer,by weight, ranges from 1:99 to 10:90, and more preferably from 4:96 to 8:92.

A suitable graft polymer is exemplified by ethylene-vinyl acetate copolymer. Impact-resistance and processability of the blended resin composition is severely compromised at high concentrations of vinyl chloride in the vinyl chloride resin. Flame-retarding and heat-tolerance properties of the blended resin composition deteriorate as the content of ethylene and vinyl acetate in the blended resin composition increases.

Accordingly, the preferred composition ratio, by weight, of ethylene to vinyl acetate to vinyl chloride ranges from 2:1:97 to 25:20:55. It is more preferable that the ratio of the three compounds range from 5:2:93 to 10:6:84.

When the chlorine content of the vinyl chloride resin falls below 50 weight percent, the flame-retarding and heat-tolerance properties of the blended resin composition begin to deteriorate. Alternatively, when the total chlorine content of the blended resin composition exceeds 73 weight percent, the processability of the blended resin composition begins to deteriorate.

Outside the preferred ranges it is difficult to produce articles from the blended resin composition. It is preferable that the chlorine content of the vinyl chloride resin range from 56 to 71 weight percent.

Impact-resistance and heat-tolerance of the blended resin composition begin to deteriorate when the degree of polymerization of the vinyl chloride resin falls below 400.

Alternatively, the ability to process the blended resin composition begins to deteriorates when the degree of polymerization of the vinyl chloride resin composition exceeds 1500. Similarly, the blended resin composition begins to generate excessive hydrogen chloride fumes upon burning when the degree of polymerization of the vinyl chloride resin exceed 1500. Thus, the preferred degree of polymerization of the vinyl chloride resin ranges from 400 to 1500.

The degree of polymerization is determined by measuring the specific viscosity of a nitrobenzene solution containing the vinyl chloride resin. Please refer to Japanese Industrial Standard (JIS; hereafter the same) K 6721 (1977).

In determining the degree of polymerization a calibration curve aids in correcting errors in the degrees of polymerization of the copolymer and the chlorinated vinyl chloride resin.

### Flame-retarding agent

The flame-retarding agents used in this invention include at least one member selected from the group consisting of magnesium hydroxide, hydrotalcite, antimony oxides, molybdenum compounds, and bromine compounds.

The hydrotalcites for use in this invention include hydrated carbonate minerals represented by the following formula:

Mg₆R₂(OH)₁₆CO₃ 4 H₂O

wherein R is at least one of Al, Cr, or Fe.

Among these hydrotalcites, a manasseite in which R is Al, is preferred.

The antimony oxides include, for example, antimony dioxide, antimony trioxide, antimony tetroxide, and antimony pentoxide.

The molybdenum compounds include, for example, molybdenum trioxide, molybdenum disulfide, sodium molybdate, ammonium molybdate, ammonium dimolybdate, and ammonium octamolybdate.

Ammonium octamolybdate is the preferred molybdenum compound since it imparts less color during molding.

The bromine compounds include, for example, tetrabromobisphenol A, tetrabromobisphenol A-bis(2,3-dibromopropyl ether), tetrabromobisphenol A-bis(allyl ether), decabromodiphenyl oxide, octabromodiphenyl oxide, decabromodiphenyl ether, an aromatic bromine compound such as tetrabromophthalic anhydride, a cyclic bromine compound such as hexabromocyclododecane, an aliphatic bromine compound such as tetrabromoethane and tetrabromobutane, and a bromine-containing oligomer or polymer such as polydibromophenylene oxide.

The amount of the flame-retarding agent added to 100 parts by weight of the blended vinyl chloride based resin ranges from 1 to 30 parts by weight, preferably from 5 to 120 parts by weight. Heat tolerance (sometimes referred to as heat resistance) decreases while the fume emission increases when the amount of the flame-retarding agent added is low. On the other hand, impact-resistance and the processing property deteriorate at high concentrations of the flame-retarding agent.

### Graft polymer

The graft polymer for use in the present invention is formed by graft polymerizing from 10 to 95 parts by weight of a composite rubber with from 90 to 5 parts by weight of a vinyl based monomer.

The average particle size of the composite rubber ranges from 0.07 to 0.8 microns. The composite rubber is characterized by a intertwined network structure which is inseparable.

The composite rubber contains from 1 to 50 parts by weight of polyorganosiloxane rubber and from 99 to 50 parts by weight of a rubber selected from the group consisting of polyalkyl acrylate rubber and polyalkyl methacrylate rubber.

Preferably, the polyalkyl acrylate and polyalkyl methacrylate rubbers for forming the graft polymer are a polybutyl acrylate rubber. The vinyl chloride based monomer is preferably methyl methacrylate. A gel fraction of the composite rubber is preferably higher than 80 weight percent.

It is preferable that the composite rubber contain from 1 to 50 weight percent of polyorganosiloxane rubber and from 50 to 99 weight percent of at least one rubber selected from the group consisting of polyalkyl acrylate and polyalkyl methacrylate rubbers. It is preferred that the content of polyorganosiloxane rubber be from 4 to 20 weight percent while the content of one of a polyalkyl acrylate and polyalkyl methacrylate rubber be from 80 to 96 weight percent.

The above-noted polyorganosiloxane rubber is formed by polymerization an organosiloxane with a suitable cross-linking agent. A grafting agent can also be used together in this polymerization.

A preferred organosiloxane is one selected from the group consisting of cyclic organosiloxane with a 3-6 member ring such as hexamethyl cyclotrisiloxane, octamethyl cyclotetrasiloxane, decamethyl cyclopentasiloxane, dodecamethyl cyclohexasiloxane, trimethyl triphenyl cyclotrisiloxane, tetramethyl tetraphenyl cyclotetrasiloxane, and octaphenyl cyclotetrasiloxane. Each of the above noted organosiloxanes can be used alone or in combination with other organosiloxane compounds.

With regards to a suitable cross-linking agent, a silane compound with a plurality of alkoxy groups, preferably 3 or 4, is preferred. A suitable cross-linking agent may include, for example, trimethoxy methyl silane, tetramethoxy silane, triethoxy methyl silane, tetraethoxy silane, tetrapropoxy silane, tetrabutoxy silane, trimethoxy phenyl silane, and triethoxy phenyl silane. Each of these cross-linking agents can be used separately or in combination with another cross-linking agent.

With regards to a grafting agent for the polyorganosiloxane, a compound exhibiting high grafting efficiency is preferred. A preferred grafting agent includes at least one member selected from the group consisting of acryloyl oxysiloxane and methacryloyl oxysiloxane compounds.

Suitable grafting agents include one of a γ-acryloyl oxypropyl dimethoxy methyl silane, γ-acryloyl oxypropyl trimethoxy silane, γ-acryloyl oxypropyl ethoxy diethyl silane, γ-acryloyl oxypropyl diethoxy methyl silane, γ-acryloyl oxypropyl methoxy dimethyl silane, β-acryloyl oxyethyl dimethoxy methyl silane, δ-acryloyl oxybutyl diethoxy methyl silane, γ-methacryloyl oxypropyl dimethoxy methyl silane, γ-methacryloyl oxypropyl trimethoxy silane, γ-methacryloyl oxypropyl ethoxy diethyl silane, γ-methacryloyl oxypropyl diethoxy methyl silane, γ-methacryloyl oxypropyl methoxy dimethyl silane, β-methacryloyl oxyethyl dimethoxy methyl silane, and δ-methacryloyl oxybutyl diethoxy methyl silane. Each of the aforementioned grafting agents can be used individually or in combination with other grafting agents.

It is preferable that the polymerization ratio among the organosiloxane and the cross-linking agent and the grafting agent for polyorganosiloxane be such that the amount of organosiloxane vary from 70 to 99.9 weight percent, the cross-linking agent for polyorganosiloxane vary from 0.1 to 30 weight percent, while the grafting agent is present in an amount less than 15 weight percent.

The polyorganosiloxane rubber can be polymerized by any one of several conventional methods. One such method is disclosed in U.S. Patent Nos. 2,891,920 and 3,294,725. In accordance with the method, it is preferable to dissolve an emulsifying agent such as sulfonic acid exemplified by an alkyl benzene-sulfonic acid and an alkyl sulfonic acid, in water to provide an aqueous solution.

This is followed by adding the organosiloxane, the cross-linking agent, and if needed, the grafting agent to the thus formed aqueous solution. The emulsion polymerization of the organosiloxane is completed by agitating the above mixture.

Polyalkyl acrylate rubber and polyalkyl methacrylate rubber are formed from polymerization of alkyl acrylate and alkyl methacrylate compounds with suitable cross-linking agents. The polymerization can be accomplished by reacting a suitable grafting agent selected from the group, noted previously, with at least one of the numerous alkyl acrylate and alkyl methacrylate compounds mentioned hereinafter.

The above-noted alkyl acrylate and alkyl methacrylate compounds include, for example, methyl acrylate, ethyl acrylate, butyl acrylate, 2-ethyl hexyl acrylate, lauryl acrylate, methyl methacrylate, ethyl methacrylate, butyl methacrylate, 2-ethyl hexyl methacrylate, and lauryl methacrylate. It is preferable to use butyl methacrylate.

Each of the above mentioned alkyl methacrylate and alkyl acrylate compounds can be used separately or in combination with one another.

A preferable cross-linking agent for the alkyl acrylate and alkyl methacrylate compounds, is one containing more than two reactive double bonds. The cross-linking agent includes at least one member selected from the group consisting of ethylene glycol diacrylate, propylene glycol diacrylate, hexamethylene diacrylate, pentaerythritol diacrylate, pentaerythritol triacrylate, ethylene glycol dimethacrylate, propylene glycol dimethacrylate, hexamethylene dimethacrylate, pentaerythritol dimethacrylate, pentaerythritol trimethacrylate, and divinyl benzene.

The above-noted grafting agents for the alkyl acrylate and alkyl methacrylate compounds include at least one of a triallyl isocyanurate, allyl methacrylate, and the like.

Alkyl acrylate and alkyl methacrylate are preferred. More preferably, methyl methacrylate is used because of the excellent compatibility between the vinyl chloride based resin and the methyl methacrylate.

It is preferred that the polymerization ratio between at least one of an alkyl acrylate and alkyl methacrylate, the cross-linking agent and the grafting agent for the above-noted compound range from 80 to 99.9 percent by weight of at least one of an alkyl acrylate and alkyl methacrylate to from 0.1 to 20 percent by weight of the cross-linking agent to less than 10 percent by weight of the grafting agent.

The polyalkyl methacrylate rubber forms an intertwined, inseparable network structure with the above-noted polyorganosiloxane rubber. The method for polymerization is describe hereinafter.

An emulsion containing polyorganosiloxane rubber is neutralized by the addition of an aqueous alkali solution such as sodium hydroxide or sodium carbonate. The polyorganosiloxane rubber is obtained by an emulsion polymerization reaction.

After completing the neutralization step, a compound selected from the group consisting of alkyl acrylate and alkyl methacrylate, a cross-linking agent selected from the group consisting of alkyl acrylate and alkyl methacrylate, and if needed, a grafting agent selected from the group consisting of alkyl acrylate and alkyl methacrylate, and an initiator for polymerization are added to the neutralized solution. This is followed by impregnating the thus obtained solution with particles of polyorganosiloxane rubber.

The polymerization reaction may begin with conventional radical initiators. These include but are not limited to, dicumyl peroxide, t-butyl peroxide, potassium persulfate, ammonium persulfate and the like.

With an intertwined, inseparable network structure, the composite rubber used in the present invention is formed by combining a polyorganosiloxane rubber with at least one rubber selected from the group consisting of polyalkyl acrylate and polyalkyl methacrylate rubbers.

The resulting composite rubber forms an intertwined, inseparable network structure which is incapable of being dissolved by an organic solvent. Thus, a gel fraction of more than 80 weight percent is preferred. Gel fraction is defined as the weight fraction of the resin which is incapable of being extracted by toluene at 90°C for 12 hours.

It is noted that the presence of the abovementioned rubbers, which are selected from the group consisting of polyalkyl acrylate and polyalkyl methacrylate rubbers may effect the moldings and products formed from the blended resin composition.

Essentially, impact-resistance of the blended resin composition of the present invention can be substantially improved by increasing the content of the composite rubber, which includes at least one of a polyalkyl acrylate and polyalkyl methacrylate rubber.

However, an increase in the content of at least one of a polyalkyl acrylate and polyalkyl methacrylate rubber, substantially decreases the moldability of the blended resin composition. Similarly, impact resistance of the blended resin composition decreases with a simultaneous decrease in the content of one of the above mentioned rubbers.

Impact resistance of the blended resin composition, rapidly deteriorates with a decrease in the average particle size of the composite rubber. On the other hand, the moldability of the blended resin composition is compromised when the average particle size of the composite rubber becomes large. As such, it is preferable that the average particle size of the composite rubber be from 0.07 to 0.8 micron, and more preferably from 0.07 to 0.4 microns.

Preferred vinyl chloride based monomer for use in the instant invention may include at least one of an alkyl acrylate such as, methyl acrylate, ethyl acrylate, butyl acrylate, 2-ethyl hexyl acrylate and the like, and an alkyl methacrylate such as, methyl methacrylate, ethyl methacrylate, butyl methacrylate, 2-ethyl hexyl methacrylate and the like. Acrylonitrile, methacrylonitrile, styrene, α-methyl styrene, and vinyl toluene can also be used.

During graft polymerization, the content of the composite rubber ranges from 10 to 99 weight percent, while the content of the vinyl chloride monomer ranges from 5 to 90 weight percent. The preferred content of the composite rubber is from 60 to 90 weight percent, while the preferred content of the vinyl monomer is from 10 to 40 weight percent.

It is noted that dispersion of the vinyl chloride monomer in the blended resin composition is severely hampered when the amount of the vinyl chloride monomer is low. On the other hand, when the content of the vinyl chloride monomer is high, the impact resistance of the blended resin composition and products derived therefrom is substantially decreased.

To make a graft polymer, any conventional method for polymerization can be utilized. One such example includes the use of a radical initiating agent.

The graft polymers mentioned above are disclosed in Japanese Laid Open Patent Publication No.1-279954.

Impact resistance of the blended resin composition and products derived therefrom substantially decreases when the amount of the graft polymer added to the 100 parts by weight of the blended resin composition falls below 1 part by weight.

On the other hand, the flame-resistance property of the blended resin composition including products derived therefrom substantially decreases when the content of the graft polymer exceeds 30 parts by weight. The blended resin composition emit substantial smoke and toxic fumes upon burning when the amount of the graft polymer added to the blended resin composition exceeds 30 parts by weight.

Accordingly, the preferred amount of graft polymer added to 100 parts by weight of the blended resin composition is from 1 to 30 parts by weight, and more preferably, from 8 to 20 parts by weight.

### Impact modifier

In order to substantially improve impact resistance of the blended resin composition, it is advisable to include at least one impact-modifier to the starting material.

The impact-modifier is a member selected from the group consisting of chlorinated polyethylene, MBS resin, ABS resin, NBR (nitrile butadiene rubber), acrylate-based impact modifiers, ethylene-vinyl acetate copolymer, ethylene-vinyl acetate-carbon monoxide copolymer, ethylene-alkyl acrylate-carbon monoxide copolymer, and ethylene-alkyl methacrylate-carbon monoxide copolymer.

The preferred degree of chlorination of the chlorinated polyethylene is from 25 to 45 weight percent, and more preferably from 30 to 40 weight percent.

When the degree of chlorination of the chlorinated ethylene falls below 25 weight percent, compatibility between the chlorinated polyethylene and the vinyl chloride based resin decreases. This decrease in compatibility, in turn, yields a blended resin composition which exhibits low impact resistance. This low impact resistance, in turn, is imparted to products derived from the blended resin composition.

In contrast, when the degree of chlorination of the polyethylene exceeds 45 weight percent, the resulting blended resin composition becomes rigid and is capable of disintegrating upon impact. Such products also generate substantial amounts of toxic fumes such as hydrogen chloride during combustion.

The chlorinated polyethylene is produced from a process involving chlorination of polyethylene. The average molecular weight of the polyethylene is preferably from 50,000 to 400,000, and more preferably, from 150,000 to 300,000. Impact resistance of the blended resin composition is decreased substantially when the average molecular wight of the polyethylene falls below 50,000.

Any conventional MBS and ABS resin can be used as an impact-modifier in this invention. Some of these MBS and ABS resins are disclosed in U.S. Patent Nos. 3,644,589 and 3,985,693.

The above-noted acrylate based impact-modifier can include one of a cross-linked polyacrylate rubber or its graft polymer formed with an acrylate such as methyl methacrylate. The cross-linked polyacrylate rubber has an average molecular weight of from 100,000 to 1,000,000.

Such impact-modifiers are commonly used as impact-modifier for vinyl chloride based resin. An example of an impact-modifiers for use in the instant invention includes acrylate based impact-modifier KM-334 (manufactured by Rohm and Haas), and "KANE-ACE FM" (manufactured by Kanegabuchi Kagaku).

The above-noted examples of impact-modifiers include, for example, ethylene-vinyl acetate-carbon monoxide copolymer, ethylene-alkyl acrylate-carbon monoxide copolymer, and the ethylene-alkyl methacrylate-carbon monoxide copolymer are three-component copolymers consisting of ethylene, carbon monoxide, and vinyl acetate, or alkyl acrylate, or alkyl methacrylate.

The above-noted impact modifiers are readily available from numerous sources, including DuPont Company, under the trade name of "ELVALOY 741" and "ELVALOY HP."

The amount of the above-noted impact-modifier to be added is less than 30 parts by weight per 100 parts by weight of the vinyl chloride based resin. The heat-tolerance and flame-retarding property of the blended resin composition decrease substantially when the amount of the impact-modifier exceeds 30 parts by weight.

It is preferred that the total amount of the impact modifier and the graft polymer be from 5 to 30 parts by weight, and more preferably from 8 to 20 parts by weight.

### Formula I and Formula II Compounds

The blended resin composition may further include a mixture containing a compound represented by formula 1, which includes ammonium polyphosphate and a compound represented by formula II, which may include tris(2-hydroxyethyl) isocyanurate. The mixture composed of the aforementioned two compounds are mixed in a weight ratio of from about 1:4 to about 4:1. The aforementioned mixture is thought to inhibit generation of hydrogen chloride fumes during combustion.

(NH₄PO₃)ₙ where n = 800 - 2000 Formula I

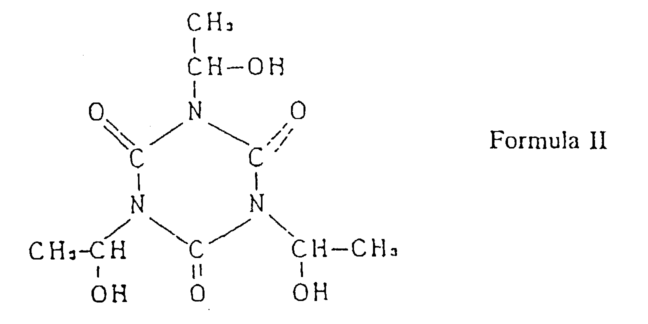

It is noted that, in formula I, a small value for n causes the ammonium polyphosphate to vaporize. This in turn, results in an absence of ammonium polyphosphate from products derived from the blended resin composition. When the value of n in formula I falls below 800, the above mentioned inhibitory effect of the mixture decreases over a period of time.

On the other hand, when the value of n exceed 2000, dispersion of polyphosphate into the vinyl chloride based resin substantially deteriorates.

The emission of toxic fumes containing hydrogen chloride can be substantially reduced when the ammonium polyphosphate shown in formula I and tris(2-hydroxyethyl) isocyanurate shown in formula II are added together.

The ratio between the ammonium polyphosphate shown in formula I and the tris(2-hydroxyethyl) isocyanurate shown in formula II is preferably from 1:4 to 4:1, more preferably from 1:1 to 4:1, and most preferably from 5:2 to 7:2.

When the ratio of the ammonium polyphosphate to tris(2-hydroxyethyl) isocyanurateis exceeds the above noted range or falls below the above noted range, the amount of toxic fumes containing hydrogen chloride during combustion of the blended resin composition is substantially increased.

In order to effectively inhibit substantial amounts of toxic fumes such as hydrogen chloride, the amount of the above-noted mixture of ammonium polyphosphate and tris(2-hydroxyethyl) isocyanurate to be added to 100 parts by weight of the blended resin composition is preferably from 1 to 40 parts by weight, and more preferably from 5 to 20 parts by weight.

### Titanium coupling agent

The blended resin composition may further include a titanium coupling agent. Its inclusion is optional, however, the presence of this compound substantially improves the overall impact resistance of the blended resin composition and products derived therefrom. The amount of the titanium coupling agent preferably ranges from 0.1 to 8 parts by weight. The titanium coupling agent is generally represented by the following formula III, infra: 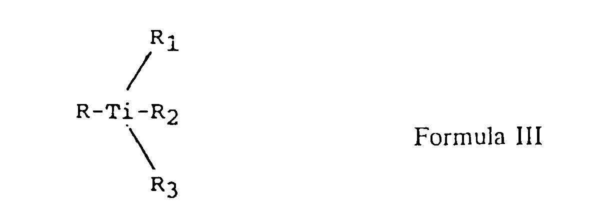 where, R includes at least one of neopentyl(dially)oxy group, an isopropyl group, or an alkoxy group;

R₁, R₂ and R₃ include at least one of a dioctyl phosphate group, a dioctyl pyrophosphate group, a N-ethylene diaminoethyl group, a m-aminophenyl group, a hydroxy caproyl group, an acrylic group, a methacrylic group, a dodecyl benzene-sulfonyl group, or a stearyl group. R₁, R₂ and R₃ may be the same or different.

The titanium-based coupling agent includes at least one member selected from the group consisting of an isopropyl tri(i-stearoyl) titanate, an isopropyl tris(dioctyl pyrophosphate) titanate, an isopropyl tri(N-aminoethyl) titanate, a tetra-octyl bis(ditridecyl phosphide) titanate, a tetra(2,2-diallyloxymethyl-1-butyl) bis(ditridecyl) phosphite titanate, a bis(dioctyl pyrophosphate) oxyacetate titanate, a bis(dioctyl pyrophosphate) ethylene titanate, an isopropyl trioctanoyl titanate, an isopropyl dimethacryl isostearoyl titanate, an isopropyl tridecyl benzene-sulfonyl titanate, an isopropyl isostearoyl diacryl titanate, an isopropyl tri(dioctyl phosphate) titanate, an isopropyl tricumyl phenyl titanate, an isopropyl tri(N-ethylene diamino)ethyl titanate, a tetraisopropyl bis(dioctyl phosphite) titanate,anisopropyl(4-amino)benzene-sulfonyldi(dodecyl)benzene-sulfonyl titanate, an alkoxytriacryl titanate, an alkoxytrimethacryl titanate, a neopentyl(diallyl)oxytrineodecanoyl titanate, a neopentyl(diallyl)oxytri(dodecyl)benzene-sulfonyl titanate, a neopentyl(diallyl)oxytri(dioctyl)phosphate titanate, a neopentyl(diallyl)oxytri(dioctyl)pyrophosphate titanate, a neopentyl(diallyl)oxytri(N-ethylene amino) ethyl titanate, a neopentyl(diallyl)oxytri(m-amino)phenyl titanate, and a neopentyl(allyl)oxytrihydroxycaproyl titanate.

Neopentyl(diallyl)oxytri(dioctyl) pyrophosphate titanate is the preferred titanium-based coupling agent.

Although the inclusion of the titanium coupling agent is optional, when present in an amount exceeding 10 weight percent, the titanium coupling agent substantially reduces heat-tolerance of the blended resin composition. It is more preferable to add from 0.5 to 2 weight percent of the titanium coupling agent to the starting material.

The titanium-based coupling agent can be added in conjunction with the mixture containing the ammonium polyphosphate represented by formula I and the tris(2-hydroxyethyl) isocyanurate as shown in formula II, wherein the formula I and formula II compounds are added in a weight ratio of from 1:4 to 4:1.

Since both the titanium-based coupling agent and the mixture of the ammonium polyphosphate and the tris(2-hydroxyethyl) isocyanurate reduce heat-tolerance of the blended resin composition and products derived therefrom, it is preferable that the total amount of the components not exceed 30 weight percent.

The blended resin composition can further include conventional thermal stabilizers, lubricants, processing aide components, inorganic fillers, UV absorbers, anti-oxidants, and coloring matters.

### Thermal Stabilizers

Thermal stabilizers for use in the present invention are exemplified by an organic tin-based stabilizer such as dibutyl tin bis(ω-carboxylauryl methyl mercaptide, butyl tin tris(i-octyl methyl mercaptoacetate), dibutyl tin bis(octyl mercaptide), dibutyl tin bis(benzyl mercaptide), dioctyl tin bis(octyl mercaptide), dimethyl tin bis(benzyl mercaptide), dimethyl tin bis(cyclohexyl mercaptide), dibutyl tin maleate, and dimethyl tin maleate.

A dibasic phosphite salt, a tribasic sulfate salt, and a metallic soap such as calcium stearate, barium stearate, and cadmium stearate can also be used. The addition of the thermal stabilizers is facultative. The preferred amount of the thermal stabilizer for use in the instant invention ranges from 1 to 5 weight percent.

### Lubricant

Addition of a lubricant to the starting material is likewise facultative. At least one lubricant selected from the group consisting of a polyethylene-based wax, a ester-based wax, a montanic acid-based wax, stearic acid, and calcium stearate can be added to the starting material.

### Processing-aide components

Processing-aide components such as polymethyl methacrylate having an average molecular weight of from 20,000 to 500,000 and its copolymers and modified forms can also be used in the instant invention.

### Inorganic Fillers

Inorganic filler for use in the present invention include at least one of an inorganic fiber such as glass fiber, carbon fiber, alumina fiber, zirconia fiber, and boron nitride can be used. Calcium carbonate, barium carbonate, iron oxide, lead oxide, titania, silica, clay, mica, and talc also can be used.

### UV absorbers and anti-oxidants

A hindered amine compound, a phosphate compound, and a β-diketone compound are examples of one of a UV absorber and anti-oxidant for use in the present invention.

The products derived from the blended resin composition of the present invention are obtained by thermoforming the blended resin composition. Any one of several prior art thermoforming method can be utilized for producing products containing the blended resin composition of the present invention. Thermoforming methods may include one of extrusion, injection, vacuum, pressing, calendaring, blowing and the like.

The resulting products which encompass the blended resin composition of the present invention exhibit superior mechanical and physical properties together with improved chemical resistance properties similar to those made from conventional vinyl chloride based resins, but without the added disadvantages associated with prior art vinyl chloride resins, such as generation of toxic fumes containing hydrogen chloride.

Additionally, such products exhibit superior flame-retarding, impact-resistance, heat-tolerance, and processibility such as during a vacuum molding.

The amounts of heat, smoke, and hydrogen chloride generated by products formed from the blended resin composition of the present invention are substantially low compared to prior art products made from conventional vinyl chloride resins. As such, products derived from the blended resin composition of the present invention are suitable candidates for use as chief constituents in building material and as flame-retardant materials for use inside aircraft.

Described hereinafter, are the various elements as used in the present invention. All percentages hereinafter referred to are in weight terms unless otherwise stated. The raw material and the reagents used are listed below:
**1. Vinyl Chloride Based Resins**
   (1) Polyvinyl Chloride: Polyvinyl chloride resin TS-800E®, degree of polymerization 800, obtained from Tokuyama Sekisui Kogyo KK.
   (2) Chlorinated Polyvinyl Chloride: Chlorinated polyvinyl chloride resin HA-34F®, degree of chlorination 64.8%, degree of polymerization 690, obtained from Tokuyama Sekisui Kogyo KK.
   (3) E-Vinyl Acetate-Vinyl Chloride Copolymer: Ethylene-vinyl acetate-vinyl chloride graft copolymer TGH-1100®, weight ratio 7/2/9, degree of polymerization ca. 1000, obtained from Tokuyama Sekisui Kogyo KK.
   (4) E-Vinyl Chloride Copolymer: Ethylene-vinyl chloride copolymer VE-H®, weight ratio 4/96, degree of polymerization ca. 800, obtained from Tokuyama Sekisui Kogyo KK.
**2. Flame-retarding Agents**
   (1) Hydrotalcite: ARUKAMAIZA/ALKAMIZER-2®, obtained from Kyowa Kagaku Kogyo KK.
   (2) Ammonium Octamolybdate: AOM®, obtained from Climax Molybdenum Company.
   (3) **Antimony Trioxide:** FUREMUKKATO/FLAMECUT 610®, obtained from Toso Kabushiki Kaisha.
   (4) Magnesium Hydroxide: VERSAMAG®, obtained from Morton International,Inc.
   (5) Bromine Compound: FAIAGADO/FIREGUARD FG-3100®, tetrabromobisphenol A-bis(2,3-dibromopropyl ether, obtained from Teijin Kasei KK.
   (6) Molybdenum Complex: SKR-802, obtained from Kikuchi Color KK.
**3. Impact Modifiers**
   (1) Chlorinated Polyethylene: ESUMMIKU CE-28202®, degree of chlorination 35%, weighted average molecular weight 300,000, obtained from Tokuyama Sekisui Kogyo KK.
   (2) Acrylate based Modifier: Acrylate based impact modifier KM-334®, obtained from Rohm and Haas.
   (3) MBS Resin: MBS based impact modifier BTA-751®, obtained from Kureha kagaku kogyo KK.
   (4) ABS Resin: ABS based impact modifier S-3702®, acrylonitrile/butadiene/styrene= 24/45/31 (weight ratio), obtained from Sumitomo Dow KK.
   (5) NBR: JSR N230S®, acrylonitrile/butadiene= 35/65 (weight ratio), obtained from Japan Synthetic Rubber.
   (6) E-CO-Vinyl Acetate Copolymer: ERUBAROI/ ELVALOY 741®, ethylene-carbon monoxide-vinyl acetate copolymer, obtained from DuPont.
   (7) E-CO-BA Copolymer: ERUBAROI/ ELVALOY HP®, ethylene-carbon monoxide-n-butyl acrylate copolymer, obtained from DuPont.
**4. Graft Polymers**
   (1) Graft Polymer A: METABLEN S-2001, composition of composite rubber: dimethyl siloxane rubber/n-butyl acrylate rubber = 15/85 (weight ratio), average particle size of composite rubber 0.7 micron, composition of graft polymer: composite rubber/polymethyl methacrylate = 80/20, obtained from Mitsubishi Rayon KK.
   (2) Graft Polymers B-E: The graft polymers B-E were prepared by the following methods.
      98 percent of hexamethyl cyclotrisiloxane was mixed with 2 percent tetraethoxysilane to provide a mixed solution. An aqueous solution produced by dissolving 1 percent of benzene sulfonic acid in 300 parts by weight of distilled water, was added to the mixed solution. The resulting liquid was agitated in a mixer operating at 15,000 rpm. The agitated mixture was transferred to a homogenizer, dispersed at 200 Kg/cm². The thus obtained homogenized mixture was emulsified to form a dispersed liquid containing organosiloxane.
      The dispersed liquid was further agitated at 850°C for 3 hours. The resulting dispersed liquid containing organosiloxane was neutralized by adding a 0.1 M sodium hydroxide solution to form a dispersed liquid containing polyorganosiloxane rubber.
      The thus formed liquid was filtered and dried to provide a neutralized solution containing about 86.5% of polyorganosiloxane rubber having an average particle size of 0.18 microns.
      Various pre-determined amounts of the polyorganosiloxane rubber powder shown in TABLE 1 were placed into separable flasks, each containing 50 parts by weight of distilled water. The operating temperature was raised to about 60°C while the solution was simultaneously agitated and purged with dry nitrogen. Pre-determined amounts of n-butyl acrylate and allyl methacrylate shown in TABLE 1 and 0.3 part of ethylene glycol dimethacrylate were added to the above solution. The solution was further agitated for 30 minutes. This was followed by adding an aqueous solution of 0.3 percent potassium persulfate and 10 percent distilled water to each of said separable flask. The resulting solution was polymerized at 75°C for 4 hours to yield a dispersed liquid containing composite rubber. The resultant composite rubber had an average particle size and gel fraction corresponding to the value depicted in TABLE 1. The gel fraction is the weight fraction of the insoluble components after an extraction with toluene at 90°C for 20 hours.
      The dispersed liquids were maintained at 75°C and a solution comprising 40 percent of methyl methacrylate and 0.2 percent of t-butyl hydroperoxide was added continuously for 4 hours. Graft polymerization was carried out at 75°C for 3 hours to yield a dispersed liquids of the graft copolymers. The dispersed liquids of the graft copolymers were dripped into hot water, solidified and separated. These graft copolymers were dried at 60°C for 24 hours under vacuum to give the graft copolymers B-E
**5. Coupling Agents**
   (1) Titanium Coupling Agent A: Titanium based coupling agent LICA-38®, titanium IV 2,2(bis 2-propenolatomethyl) butanolato, tris(dioctyl)pyrophosphate-0, obtained from Kenrich Petrochemicals, Inc.
   (2) Titanium Coupling Agent B: Titanium based coupling agent LICA-44®, titanium IV 2,2(bis 2-propenolatomethyl) butanolato, tris(2-ethylenediamino)ethylato, obtained from Kenrich Petrochemicals, Inc.
   (3) Titanium Coupling Agent C: Titanium based coupling agent KR-TTS, titanium IV 2-propanolato, trisisooctadecanoato-0, obtained from Kenrich Petrochemicals, Inc.
   (4) Zirconium Coupling Agent B: Zirconium based coupling agent KZ-55, zirconium IV tetrakis 2,2(bis 2-propenolatomethyl) butanolato, adduct with 2 moles of ditridecyl hydrogen phosphite, obtained from Kenrich Petrochemicals, Inc.
**6. Hcl-Inhibitors**
   (1) Mixture of ammonium polyphosphate and tris(2-hydroxyethyl) isocyanurate (weight ratio 71:29), obtained from Hoechst AG.
**7. Miscellaneous**
   (1) Tin-based Stabilizer: STANN JF-10B, dibutyl tin mercapto, obtained from Sankyo Yuki Gosei KK.
   (2) Polyethylene-based Lubricant: AC-316A, obtained from Allied Chemicals.
   (3) Ester-based Lubricant: WAX-OP, obtained from Hoechst AG.
   (4) Acrylate-based Processing-aide: K-125, obtained from Rohm and Haas.

The properties of the resulting products including moldings containing the blended resin composition of the present invention were measured. These included heat generation, smoke generation, generation of hydrogen chloride gas, impact-resistance, heat distortion temperature, and vacuum molding.

Described hereinafter are the tests used to measure the above-noted properties:
1. Heat Generation:
   (1) THR: Measured the total heat released (unit: Kw.min/cm²) with the ASTM E906 Ohio State University calorimeter for 2 minutes.
   (2) HRR: Measured the total heat released (unit: Kw/cm²) by means of a ASTM E906 Ohio State University calorimeter for 5 minutes.
2. Smoke generation:
   (1) ASTM E662-79: Measured smoke concentration (D_{S}) by means of a NBS Smoke Chamber for a period of 4 minutes.
3. Generation of Hydrogen Chloride:
   (1) The amount of hydrogen chloride generated by the sample was measured by a DOREGERU/TRAGEL Detector after the sample had been burned in the NBS Smoke Chamber for a period of 4 minutes.
4. Impact-resistance:
   (1) Japanese Industrial Standard (JIS) K 7110: Unit: Kg.cm/cm².
5. Heat Distortion Temperature:
   (1) JIS K 7207
6. Vacuum Molding
   (1) Measured The dimension of the moldings obtained were measured by Vacuum Molding Device/Machine CUPF-1011 made by Fuse Shinku KK. The symbol "o" signifies that the dimensions of the moldings matched that of the shaping mold, while an "x" indicates that the dimensions of the moldings did not match that of the shaping mold.
7. Appearance of Moldings
   (1) The appearance of the moldings obtained from the vacuum molding device/machine were examined by the naked eye. An "o" is indicative of a good surface condition, while a "x" signifies one of a deformity, cut, crack and similar drawbacks on the surface.

Examples embodying the blended resin composition of the present invention are described hereinafter.

### EXAMPLES 1-32 AND COMPARISONS 1-15

Pre-determined amounts of vinyl chloride resin (average degree of polymerization 800), chlorinated vinyl chloride resin (averaged degree of polymerization 690, chlorine content 64.8), polyfluorovinylidene (degree of polymerization 1000), ammonium octamolybdate and magnesium hydroxide shown in TABLE 2-9 were mixed with 1.2 parts of polyethylene-based lubricant AC-316A (Allied Chemicals), 1 part of montanic acid waxes WAX-OP (Hoechst), 3 parts of dibutyl tin dimercapto JF-10B (Sankyo Yuki Gosei), and 4 parts of acrylate-based modifier KM-334 (Rohm and Haas) were added to a twin screw, counter-rotation extruder having a diameter of 50 mm.

The barrel temperature of the twin screw counter-rotation extruder was maintained at a constant temperature of from about 160 to about 180°C, while the shaping mold temperature was maintained at 180 to about 190°C. The thickness of the resulting molded sample was measured to be 3 mm.

The properties of the molded sample with regards to heat generation, smoke generation, generation of hydrogen chloride, impact-resistance, heat distortion temperature, and vacuum molding were measured and are reported in TABLES 10-17.

**TABLE 1**

| | | Graft Copolymer | | | | | |
|---|---|---|---|---|---|---|---|
| | | B | C | D | | E | |
| Component of Composite Rubber (Part by Weight) | Polyorganosiloxane | 30 | 10 | 60 | | 90 | |
| | ⁿ-Butyl Acrylate | 100 | 100 | 80 | | 10 | |
| | Allyl Methacrylate | 2 | 2 | 2 | | 2 | |
| Averaged Particle Size of Composite Rubber (µm) | | 0.21 | 0.22 | 0.29 | | 0.28 | |
| Gel Fraction of Composite Rubber (wt %) | | 98 | 95 | 92 | | 90 | |

**TABLE 2**

| (Part by Weight) | | | | | | | | |
|---|---|---|---|---|---|---|---|---|
| | | Example | | | | | | |
| | | 1 | 2 | 3 | 4 | 5 | 6 | 7 |
| Vinyl Chloride Resin | (1) | 100 | 85 | 50 | - | - | - | 100 |
| | (2) | - | 15 | 50 | 100 | - | - | - |
| | (3) | - | - | - | - | 100 | - | - |
| | (4) | - | - | - | - | - | 100 | - |
| Flame Retarding Agent | (1) | 20 | 20 | 20 | 15 | 30 | 40 | 20 |
| | (2) | 8 | - | - | - | - | 8 | 8 |
| | (3) | 4 | 4 | 4 | 4 | 4 | 4 | 4 |
| Graft Polymer (A) | | 12 | 12 | 12 | 12 | 12 | 12 | 14 |
| Coupling Agent (1) | | 0.5 | 0.5 | 0.5 | 0.5 | 0.5 | 0.5 | - |
| Chlorine Content of Vinyl Chloride Resin (wt %) | | 56.8 | 58.0 | 60.8 | 64.8 | 51.7 | 54.5 | 56.8 |
| (wt %) refers to percentage by weight of chlorine in the Vinyl chloride resin. | | | | | | | | |

**TABLE 3**

| (Part by Weight) | | | | | | | |
|---|---|---|---|---|---|---|---|
| | | Example | | | | | |
| | | 8 | 9 | 10 | 11 | 12 | 13 |
| Vinyl Chloride Resin | (1) | 87 | 87 | 87 | 87 | 87 | 87 |
| | (2) | 13 | 13 | 13 | 13 | 13 | 13 |
| Flame Retarding Agent | (1) | 20 | 30 | 30 | 20 | 40 | 20 |
| | (2) | - | - | 10 | - | 5 | - |
| | (3) | 4 | 4 | 4 | 4 | 4 | 4 |
| | (5) | 4 | 4 | 4 | 4 | 4 | 4 |
| Graft Polymer | (A) | 12 | 15 | 20 | - | - | - |
| | (B) | - | - | - | 12 | - | - |
| | (C) | - | - | - | - | 12 | - |
| | (D) | - | - | - | - | - | 12 |
| Coupling Agent (1) | | 0.5 | 0.5 | 0.5 | 0.5 | 0.5 | 0.5 |
| Chlorine Content of Vinyl Chloride Resin (wt %) | | 57.8 | 57.8 | 57.8 | 57.8 | 57.8 | 57.8 |
| (wt %) refers to percentage by weight of chlorine in the Vinyl chloride resin. | | | | | | | |

**TABLE 4**

| (Part by Weight) | | | | | | | | | |
|---|---|---|---|---|---|---|---|---|---|
| | | Example | | | | | | | |
| | | 14 | 15 | 16 | 17 | 18 | 19 | 20 | 21 |
| Vinyl Chloride Resin | (1) | 87 | 87 | 87 | 87 | 87 | 87 | 87 | 87 |
| | (2) | 13 | 13 | 13 | 13 | 13 | 13 | 13 | 13 |
| Impact Modifier | (1) | 4 | - | - | - | - | - | - | - |
| | (2) | - | 4 | 8 | - | - | - | - | - |
| | (3) | - | - | - | 3 | - | - | - | - |
| | (4) | - | - | - | - | 2 | - | - | - |
| | (5) | - | - | - | - | - | 2 | - | - |
| | (6) | - | - | - | - | - | - | 3 | - |
| | (7) | - | - | - | - | - | - | - | 4 |
| Copolymer (A) | | 8 | 8 | 8 | 9 | 10 | 10 | 9 | 8 |
| Flame Retarding Agent | (1) | 20 | 20 | 20 | 20 | 20 | 20 | 20 | 20 |
| | (2) | - | - | 10 | - | - | - | - | - |
| | (3) | 4 | 4 | 4 | 4 | 4 | 4 | 4 | 4 |
| Coupling Agent (1) | | 0.5 | 0.5 | 0.5 | 0.5 | 0.5 | 0.5 | 0.5 | 0.5 |
| Chlorine Content of Vinyl Chloride Resin (wt %) | | 57.8 | 57.8 | 57.8 | 57.8 | 57.8 | 57.8 | 57.8 | 57.8 |
| (wt %) refers to percentage by weight of chlorine in the Vinyl chloride resin. | | | | | | | | | |

**TABLE 5**

| (Part by Weight) | | | | | | | |
|---|---|---|---|---|---|---|---|
| | | Example | | | | | |
| | | 22 | 23 | 24 | 25 | 26 | 27 |
| Vinyl Chloride Resin | (1) | 87 | 100 | 100 | 100 | 100 | 100 |
| | (2) | 13 | - | - | - | - | - |
| Flame Retarding Agent | (1) | 25 | 10 | - | - | - | 40 |
| | (2) | - | 10 | 15 | - | - | 10 |
| | (3) | 4 | 4 | - | - | 3 | 3 |
| | (4) | - | - | 4 | 5 | 5 | - |
| | (5) | 3 | - | - | 3 | - | - |
| | (6) | - | - | - | 15 | 15 | - |
| Copolymer (A) | | 15 | 15 | 15 | 15 | 15 | 20 |
| Coupling Agent (1) | | 0.5 | 0.5 | 0.5 | 0.5 | 0.5 | 0.5 |
| Chlorine Content of Vinyl Chloride Resin (wt %) | | 57.8 | 56.8 | 56.8 | 56.8 | 56.8 | 56.8 |
| (wt %) refers to percentage by weight of chlorine in the Vinyl chloride resin. | | | | | | | |

**TABLE 6**

| (Part by Weight) | | | | | | |
|---|---|---|---|---|---|---|
| | | Example | | | | |
| | | 28 | 29 | 30 | 31 | 32 |
| Vinyl Chloride Resin | (1) | 87 | 87 | 87 | 87 | - |
| | (2) | 13 | 13 | 13 | 13 | 13 |
| | (3) | - | - | - | - | 87 |
| Flame Retarding Agent | (1) | 20 | 20 | 20 | 40 | 40 |
| | (3) | 4 | 4 | 4 | 4 | 4 |
| Copolymer (A) | | 12 | 12 | 12 | 15 | 15 |
| Coupling Agent | (1) | - | - | 1 | 0.5 | 0.5 |
| | (2) | 0.5 | - | - | - | - |
| | (3) | - | 0.5 | - | - | - |
| Inhibitor for Generation of Hydrogen Chloride (Hcl-Inhibitor) | | - | - | - | 5 | 10 |
| Chlorine Content of Vinyl Chloride Resin (wt %) | | 57.8 | 57.8 | 57.8 | 57.8 | 53.4 |
| (wt %) refers to percentage by weight of chlorine in the Vinyl chloride resin. | | | | | | |

**TABLE 7**

| (Part by Weight) | | | | | | |
|---|---|---|---|---|---|---|
| | | Comparison Example | | | | |
| | | 1 | 2 | 3 | 4 | 5 |
| Vinyl Chloride Resin | (1) | 87 | 87 | 87 | 87 | 87 |
| | (2) | 13 | 13 | 13 | 13 | 13 |
| Flame Retarding Agent | (1) | 20 | 20 | 20 | 60 | 80 |
| | (2) | - | - | - | 10 | - |
| | (3) | 4 | 4 | 4 | 4 | 4 |
| | (5) | 4 | 4 | 4 | 4 | 4 |
| Graft Copolymer | (B) | - | - | - | - | 40 |
| | (D) | - | - | - | 35 | - |
| | | | | | | |
| | (E) | - | 12 | - | - | - |
| | | | | | | |
| Coupling Agent (1) | | 0.5 | 0.5 | 0.5 | 0.5 | 0.5 |
| Chlorine Content of Vinyl Chloride Resin (wt %) | | 57.8 | 57.8 | 57.8 | 57.8 | 57.8 |
| (wt %) refers to percentage by weight of chlorine in the Vinyl chloride resin. | | | | | | |

**TABLE 8**

| (Part by Weight) | | | | | | |
|---|---|---|---|---|---|---|
| | | Comparison Example | | | | |
| | | 6 | 7 | 8 | 9 | 10 |
| Vinyl Chloride Resin | (1) | 87 | 87 | 87 | 87 | 87 |
| | (2) | 13 | 13 | 13 | 13 | 13 |
| Flame Retarding Agent | (1) | 20 | 20 | 20 | 20 | 20 |
| | (2) | 4 | 4 | 4 | 4 | 4 |
| Impact Modifier | (1) | 12 | - | - | - | - |
| | (4) | - | 12 | - | - | - |
| | (5) | - | - | 12 | - | - |
| | (6) | - | - | - | 12 | - |
| | (7) | - | - | - | - | 12 |
| Coupling Agent (1) | | 0.5 | 0.5 | 0.5 | 0.5 | 0.5 |
| Chlorine Content of Vinyl Chloride Resin (wt %) | | 57.8 | 57.8 | 57.8 | 57.8 | 57.8 |
| (wt %) refers to percentage by weight of chlorine in the Vinyl chloride resin. | | | | | | |

**TABLE 9**

| (Part by Weight) | | | | | | |
|---|---|---|---|---|---|---|
| | | Comparison Example | | | | |
| | | 11 | 12 | 13 | 14 | 15 |
| Vinyl Chloride Resin | (1) | 87 | 87 | 87 | 87 | 87 |
| | (2) | 13 | 13 | 13 | 13 | 13 |
| Flame Retarding Agent | (1) | 4 | 60 | 20 | 20 | 20 |
| | (2) | - | 50 | - | - | - |
| | (3) | - | 10 | 4 | 4 | 4 |
| | (4) | - | 10 | - | - | - |
| Copolymer (A) | | 12 | 25 | 12 | 12 | 12 |
| Coupling Agent | (1) | 0.5 | 0.5 | - | 10 | - |
| | (2) (2) | - | - | - | - | 10 |
| | (4) | - | - | 0.5 | - | - |
| Chlorine Content of Vinyl Chloride Resin (wt %) | | 57.8 | 57.8 | 57.8 | 57.8 | 57.8 |
| (wt %) refers to percentage by weight of chlorine in the Vinyl chloride resin. | | | | | | |

**TABLE 10**

| | | Example | | | | | | |
|---|---|---|---|---|---|---|---|---|
| | | 1 | 2 | 3 | 4 | 5 | 6 | 7 |
| Amount of Heat Generated | THR | 47 | 50 | 46 | 48 | 58 | 59 | 50 |
| | PHR | 48 | 53 | 52 | 55 | 59 | 53 | 53 |
| Smoke Generation (DS) | | 125 | 150 | 115 | 90 | 160 | 153 | 135 |
| Generation of Hydrogen Chloride (ppm) | | 1100 | 1000 | 1200 | 1200 | 1000 | 1150 | 1100 |
| Impact Strength (Kg-cm/cm²) | | 14.5 | 16.5 | 12.0 | 14.0 | 25.0 | 30.2 | 14.3 |
| Heat Distortion Temperature (°C) | | 64.2 | 67.5 | 69.3 | 72.0 | 61.1 | 60.4 | 63.8 |
| Modability in Vacuum Molding | | ○ | ○ | ○ | ○ | ○ | ○ | ○ |
| Appearance of product | | ○ | ○ | ○ | ○ | ○ | ○ | ○ |
| THR : Kw · cm/cm² | | | | | | | | |
| PHR : Kw/cm² | | | | | | | | |

**TABLE 11**

| | | Example | | | | | |
|---|---|---|---|---|---|---|---|
| | | 8 | 9 | 10 | 11 | 12 | 13 |
| Amount of Heat Generated | THR | 48 | 45 | 40 | 50 | 38 | 49 |
| | PHR | 50 | 43 | 38 | 48 | 29 | 45 |
| Smoke Generation (DS) | | 158 | 143 | 115 | 160 | 120 | 156 |
| Generation of Hydrogen Chloride (ppm) | | 1000 | 800 | 900 | 1000 | 700 | 1000 |
| Impact Strength (Kg-cm/cm²) | | 35.5 | 14.3 | 17.5 | 38.5 | 10.5 | 37.0 |
| Heat Distortion Temperature (°C) | | 66.9 | 68.3 | 65.7 | 67.8 | 64.0 | 67.2 |
| Modability in Vacuum Molding | | ○ | ○ | ○ | ○ | ○ | ○ |
| Appearance of product | | ○ | ○ | ○ | ○ | ○ | ○ |
| THR : Kw · cm/cm² | | | | | | | |
| PHR : Kw/cm² | | | | | | | |

**TABLE 12**

| | | Example | | | | | | | |
|---|---|---|---|---|---|---|---|---|---|
| | | 14 | 15 | 16 | 17 | 18 | 19 | 20 | 21 |
| Amount of Heat Generated | THR | 53 | 45 | 41 | 51 | 50 | 49 | 51 | 54 |
| | PHR | 55 | 50 | 47 | 53 | 54 | 55 | 48 | 49 |
| Smoke Generation (DS) | | 175 | 153 | 135 | 140 | 145 | 158 | 159 | 161 |
| Generation of Hydrogen Chloride (ppm) | | 1100 | 1050 | 1000 | 1000 | 1000 | 1200 | 1050 | 1000 |
| Impact Strength (Kg-cm/cm²) | | 30.3 | 27.5 | 21.5 | 31.4 | 27.1 | 26.7 | 34.0 | 31.5 |
| Heat Distortion Temperature (°C) | | 65.5 | 66.3 | 65.1 | 66.2 | 65.3 | 64.6 | 64.0 | 65.2 |
| Modability in Vacuum Molding | | ○ | ○ | ○ | ○ | ○ | ○ | ○ | ○ |
| Appearance of product | | ○ | ○ | ○ | ○ | ○ | ○ | ○ | ○ |
| THR : Kw · cm/cm² | | | | | | | | | |
| PHR : Kw/cm² | | | | | | | | | |

**TABLE 13**

| | | Example | | | | | |
|---|---|---|---|---|---|---|---|
| | | 22 | 23 | 24 | 25 | 26 | 27 |
| Amount of Heat Generated | THR | 43 | 44 | 40 | 42 | 49 | 40 |
| | PHR | 50 | 42 | 41 | 48 | 40 | 35 |
| Smoke Generation (DS) | | 150 | 115 | 102 | 103 | 101 | 97 |
| Generation of Hydrogen Chloride (ppm) | | 1000 | 900 | 1200 | 1250 | 1100 | 1000 |
| Impact Strength (Kg-cm/cm²) | | 29.5 | 20.3 | 19.0 | 19.5 | 18.3 | 15.8 |
| Heat Distortion Temperature (°C) | | 65.2 | 64.9 | 63.8 | 64.3 | 63.9 | 62.7 |
| Modability in Vacuum Molding | | ○ | ○ | ○ | ○ | ○ | ○ |
| Appearance of product | | ○ | ○ | ○ | ○ | ○ | ○ |
| THR : Kw · cm/cm² | | | | | | | |
| PHR : Kw/cm² | | | | | | | |

**TABLE 14**

| | | Example | | | | |
|---|---|---|---|---|---|---|
| | | 28 | 29 | 30 | 31 | 32 |
| Amount of Heat Generated | THR | 50 | 50 | 49 | 50 | 41 |
| | PHR | 51 | 54 | 47 | 53 | 46 |
| Smoke Generation (DS) | | 155 | 150 | 148 | 140 | 121 |
| Generation of Hydrogen Chloride (ppm) | | 1000 | 1000 | 1000 | 700 | 500 |
| Impact Strength (Kg-cm/cm²) | | 34.0 | 34.2 | 35.0 | 19.5 | 42.4 |
| Heat Distortion Temperature (°C) | | 66.7 | 66.3 | 65.8 | 64.0 | 62.8 |
| Modability in Vacuum Molding | | ○ | ○ | ○ | ○ | ○ |
| Appearance of product | | ○ | ○ | ○ | ○ | ○ |
| THR : Kw · cm/cm² | | | | | | |
| PHR : Kw/cm² | | | | | | |

**TABLE 15**

| | | Comparison | | | | |
|---|---|---|---|---|---|---|
| | | 1 | 2 | 3 | 4 | 5 |
| Amount of Heat Generated | THR | 56 | 44 | 48 | 44 | 45 |
| | PHR | 48 | 42 | 45 | 46 | 50 |
| Smoke Generation (DS) | | 161 | 162 | 165 | 130 | 150 |
| Generation of Hydrogen Chloride (ppm) | | 1000 | 1000 | 1000 | 700 | 900 |
| Impact Strength (Kg-cm/cm²) | | 7.0 | 18.9 | 8.5 | 6.5 | 5.8 |
| Heat Distortion Temperature (°C) | | 65.0 | 63.0 | 64.2 | 61.3 | 63.8 |
| Modability in Vacuum Molding | | ○ | ○ | ○ | x | x |
| Appearance of product | | ○ | ○ | x | x | ○ |
| THR : Kw · cm/cm² | | | | | | |
| PHR : Kw/cm² | | | | | | |

**TABLE 16**

| | | Comparison | | | | |
|---|---|---|---|---|---|---|
| | | 6 | 7 | 8 | 9 | 10 |
| Amount of Heat Generated | THR | 63 | 60 | 57 | 62 | 61 |
| | PHR | 58 | 59 | 53 | 60 | 55 |
| Smoke Generation (DS) | | 230 | 245 | 185 | 175 | 181 |
| Generation of Hydrogen Chloride (ppm) | | 1450 | 1250 | 1150 | 1100 | 1250 |
| Impact Strength (Kg-cm/cm²) | | 12.3 | 11.0 | 11.5 | 18.5 | 13.5 |
| Heat Distortion Temperature (°C) | | 63.5 | 64.2 | 63.1 | 58.2 | 60.5 |
| Modability in Vacuum Molding | | ○ | ○ | x | x | ○ |
| Appearance of product | | ○ | ○ | ○ | ○ | ○ |
| THR : Kw · cm/cm² | | | | | | |
| PHR : Kw/cm² | | | | | | |

**TABLE 17**

| | | Comparison | | | | |
|---|---|---|---|---|---|---|
| | | 11 | 12 | 13 | 14 | 15 |
| Amount of Heat Generated | THR | 104 | 25 | 51 | 49 | 47 |
| | PHR | 95 | 29 | 53 | 45 | 44 |
| Smoke Generation (DS) | | 348 | 71 | 159 | 147 | 150 |
| Generation of Hydrogen Chloride (ppm) | | 4900 | 650 | 1000 | 1100 | 1000 |
| Impact Strength (Kg-cm/cm²) | | 48.0 | 3.4 | 29.8 | 24.5 | 27.2 |
| Heat Distortion Temperature (°C) | | 68.0 | 57.5 | 67.3 | 56.5 | 54.3 |
| Modability in Vacuum Molding | | ○ | x | x | x | x |
| Appearance of product | | ○ | x | ○ | x | x |
| THR : Kw · cm/cm² | | | | | | |
| PHR : Kw/cm² | | | | | | |

It seems clear from the test results that the blended resin compositions and products derived therefrom exhibited superior properties compared to prior art vinyl chloride based resins. The blended resin and products derived therefrom possessed superior flame-retarding, improved impact-resistance and improved processibility properties when compared with conventional vinyl chloride resins. Most importantly, the blended resin composition and products derived from it generated substantially less toxic fumes containing hydrogen chloride gas when compared to prior art vinyl chloride resins.

Products including moldings derived from the blended resin composition of the present invention can include, among others, panels, toilet seats and similar components for use as building materials and as shaped mass components. Products derived from the blended resin composition of the present invention are well suited for use as shaped mass components for use in aircraft, automobiles, and trains.

The blended resin composition contained a vinyl chloride based resin containing from about 56 to about 71 weight percent of chlorine. The source of the chlorine included at least one of a polyfluorovinyledine and a flame-retarding agent.

Having described preferred embodiments of the invention, it is to be understood that the invention is not limited to those precise embodiments, and that various changes and modifications may be effected therein by one skilled in the art without departing from the scope of the invention as defined in the appended claims.

## Claims

1. A blended polyvinyl chloride based resin composition comprising: 100 parts by weight of a vinyl chloride resin having a chlorine content of from 50 to 73 percent by weight;
said vinyl chloride resin is at least one member selected from the group consisting of a vinyl chloride resin, a copolymer formed of a vinyl chloride and a monomer capable of copolymerzing with said vinyl chloride, and a graft polymer formed from a polymer wherein said vinyl chloride is graft polymerized;
from 5 to 120 parts by weight of at least one flame retarding agent selected from the group consisting of magnesium hydroxide, hydrotalcite, antimony oxides, molybdenum compounds, and bromine compounds; and
from 1 to 30 parts by weight of a,graft polymer, wherein said graft polymer is formed by polymerizing from 10 to 95 parts by weight of a composite rubber and from 90 to 5 parts by weight of a vinyl based monomer:
said composite rubber containing from 1 to 50 percent by weight of a polyorganosiloxane rubber and from 99 to 50 percent by weight of at least one rubber selected from the group consisting of polyalkyl acrylate rubber and polyalkyl methacrylate rubber.

2. The blended resin composition according to claim 1 wherein said 100 parts of a vinyl chloride resin includes at least one member selected from the group consisting of an vinyl chloride resin, an ethylene-vinyl chloride copolymer, and a vinyl chloride graft polymer of an ethylene-vinyl acetate copolymer.

3. The blended resin composition according to claim 2, wherein:
a weight ratio of ethylene to vinyl chloride in said ethylene-vinyl chloride copolymer is from 1:99 to 10:90; and
a weight ratio of ethylene to vinyl acetate to vinyl chloride in said ethylene-vinyl acetate-vinyl chloride graft copolymer is from 2:1:97 to 25:20:55.

4. The blended resin composition according to claim 1, wherein:
said monomer capable of copolymerzing with said vinyl chloride includes at least one of an α-olefin, a vinyl ester, a vinyl ether, an acrylate, a methacrylate, an aromatic vinyl compound, a halovinyl compound, an a N-substituted maleimide.

5. The blended resin composition according to claim 1, wherein said composite rubber contains from 4 to 20 percent by weight of said polyorganosiloxane rubber and from 80 to 96 percent by weight of at least one of said polyalkyl acrylate rubber and said polyalkyl methacrylate rubber.

6. The blended resin composition according to claim 1, wherein:
said at least one rubber selected from the group consisting of polyalkyl acrylate rubber and polyalkyl methacrylate rubber is polybutyl acrylate rubber.

7. The blended resin composition according to claim 1, wherein said composite rubber has an average particle size from 0.07 to 0.8 micron.

8. The blended resin composition according to claim 7, wherein said average particle size ranges from 0,07 to 0,4 micron.

9. The blended resin composition according to claim 1, wherein: said chlorine content of said vinyl chloride resin is from 30 to 71 percent by weight.

10. The blended resin composition according to claim 1, wherein said vinyl based monomer is at least member selected from the group consisting of alkyl acrylate, alkyl methacrylate, acrylonitrile, methacrylonitrile, α-methyl styrene, and vinyl toluene.

11. The blended resin composition according to claim 10, wherein said alkyl acrylate is at least one member selected from the group consisting of methyl acrylate, ethyl acrylate, butyl acrylate, and 2-ethyl hexyl acrylate; and said alkyl methacrylate is at least one member selected from the group consisting of methyl methacrylate, ethyl methacrylate, 2-ethyl hexyl mehtacrylate and the like.

12. The blended resin composition according to claim 10, wherein:
said vinyl based monomer is methyl methacrylate.

13. The blended resin composition according to claim 1, wherein:
said composite rubber having a gel fraction of at least 80 percent by weight.

14. The blended resin composition according to claim 1, further comprising:
from 1 to 40 parts by weight of a mixture containing ammonium polyphosphate represented by formula I and tris (2-hydroxyethyl) isocyanurate represented by formula II:
(NH₄PO₃) I
wherein n ranges from (about) 800 to (about) 2000 and 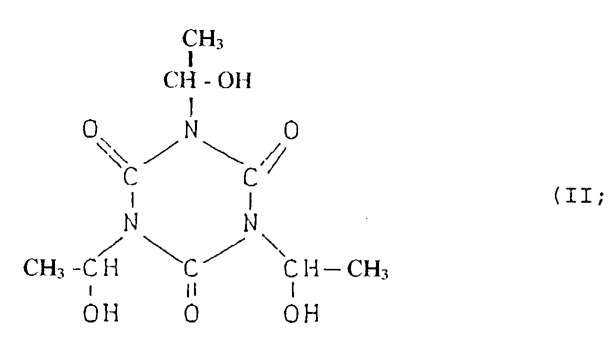 and a weight ratio of said ammonium polyphosphate to said tris isocyanurate in said mixture ranges from 1:4 to 4:1.

15. The blended resin composition according to claim 1, further comprising a titanium coupling agent, said titanium coupling agent being a member selected from the group consisting of an isopropyl tri(istearoyl) titanate, an isopropyl tris(dioctyl pyrophosphate) titanate, an isopropyl tri(N-aminoethyl) titanate,a tetra-octyl bis (ditridecyl phophide) titanate, a tetra 2,2-diallyloxymethyl-1-butyl bis (ditridecyl) phosphite titanate, a bis (dioctyl pyrophosphate) ethylene titanate, an isopropyl trioctyl titanate, an isopropyl dimethacryl isostearoyl titanate, an isopropyl tridecyl benzene-sulfonyl titanate, an isopropyl isosearoyl diacryl titanate, an isopropyl tri(dioctyl phophate) titanate, an isopropyl tricumyl phenyl titanate, an isopropyl tri(N-ethylene diamino) ethyl titanate, a tetraisopropyl bis(dioctyl phosphite) titanate, an isopropyl(4-amino)benzene sulfonyl di(dodecyl)benzene-sulfonyl titanate, an alkooxytriacryl titanate, an alkoxytrimethacryl titanate, a neopentyl(diallyl)oxytrineodecanoyl titanate, a neopentyl(diallyl)oxytri(dodecyl)benzene-sulfonyl titanate, a neopentyl(diallyl)oxytri(dioctyl)phophate titanate, a neopentyl(diallyl)oxytri(dioctylpyrophophate titanate, a neopentyl(diallyl)oxytri(N-ethylene amino) ethyl titanate, a neopentyl(diallyl)oxytri(m-amino)phenyl titanate, and a neopentyl(allyl)oxytrihydroxycaproyl titanate.

16. The blended resin composition according to claim 1, further comprising:
from 0,1 to 8 parts by weight of a titanium coupling agent, represented by formula III: 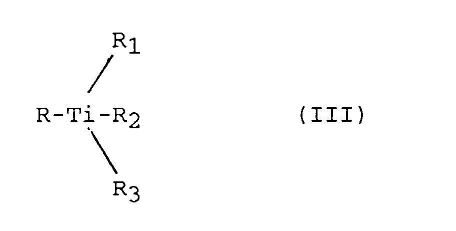 wherein,
R is at least one member selected from the group consisting of a neopentyl (diallyl)oxy group, an isopropyl group, and an alkoxy group;
R1, R2 and R3 is one of identical and different, and include at least one of a dioctyl phosphate group, a dioctyl pyrophosphate group, a N-ethylene diaminoethyl group, a m-aminophhenyl group, a hydroxy caproyl group, an acrylic group, a methacrylic group, a dodecyl benzene-sulfonyl group, or a stearyl group.

17. The blended resin composition according to claim 16, wherein said titanium coupling agent ranges from 0.5 to 2 parts by weight.

18. A blended polyvinyl chloride based resin composition comprising:
100 parts by weight of a vinyl chloride resin having a chlorine content of from about 50 to about 73 percent by weight.
said vinyl chloride resin is at least one member selected from the group consisting of a vinyl chloride resin, a copolymer formed of a vinyl chloride and a monomer capable of copolymerizing with said vinyl chloride, and a graft polymer formed from a polymer wherein said vinyl chloride is graft polymerized;
from 5 to 12 parts by weight of at least one flame-retarding agent selected from the group consisting of magnesium hydroxide, hydrotalcite, antimony oxides, molybdenum compounds, and bromine compounds;
from 1 to 30 parts by weight of a graft polymer, wherein said graft polymer is formed by polymerzing from 10 to 95 parts by weight of a composite rubber and from 90 to 5 parts by weight of a vinyl based monomer;
said composite rubber containing from 1 to 50 percent by weight of a polyorganosiloxane rubber and from 99 to 50 percent by weight of at least one rubber selected from the group consisting of polyalkyl acrylate rubber and polyalkyl methacrylate rubber; and
no more than 30 parts by weight of at least one impact-modifier selected from the group consisting of a chlorinated polyethylene having a degree of chlorination of from 25 to 45 percent by weight, a MBS resin, an ABS resin, a NBR, an acrylate-based impact-modifier, an ethylene-vinyl acetate copolymer, an ethylene-vinyl acetate-carbon monoxide copolymer, an ethylene-alkyl acrylate-carbon monoxide copolymer, and an ethylene-alkyl methacrylate-carbon monoxide copolymer.

19. The blended resin composition accoirding to claim 18, wherein said chlorinated polyethylene has an average molecular weight of from50.000 to 400.000.

20. The blended resin composition according to claim 18, wherein said degree of chlorination of said chlorinated polyethylene being from 30 to 40 percent by weight.

21. The blended resin composition according to claim 18 wherein said 100 parts of a vinyl chloride resin includes at least one member selected from the group consisting of a vinyl chloride resin, an ethylene-vinyl chloride copolymer, and a vinyl chloride graft polymer of an ethylene-vinyl acetate copolymer.

22. The blended resin composition according to claim 18, wherein:
a weight ration of ethylene to vinyl chloride in said ethylene-Vinyl chloride copolymer is from 1:99 to 10:90; and
a weight ration of ethylene to vinyl acetate to vinyl chloride in said ethylene-vinyl actetate-vinyl chloride graft copolymer of from 2:1:97 to 25:20:55.

23. An article comprising a shaped mass of the blended vinyl chloride based resin composition of claim 1.

24. An article as described in claim 23, wherein said shaped mass is an aircraft component.

25. An article comprising a shaped mass of the blended vinyl chloride based resin composition of claim 18.

26. An article as described in claim 25, wherein said shaped mass is an aircraft component.

## Patentansprüche

1. Kunstharzzusammensetzung basierend auf einer Mischung von Polyvinylchlorid, bestehend aus: 100 Gewichtsteilen eines Vinylchlorids mit einem Chlorgehalt von zwischen 50 und 73 Gewichtsprozent, wobei das Vinylchloridharz wenigstens eines aus der Gruppe aus Vinylchloridharz, einem Copolymer aus Vinylchlorid und einem Monomeren, das mit dem Vinylchlorid polymerisieren kann und einem Pfropfpolymer aus einem Polymer, bei dem das Vinylchlorid aufgepfropft ist, ist;
zwischen 5 und 120 Gewichtsteilen wenigstens eines flammhemmenden Mittels aus der Gruppe aus Magnesiumhydroxid, Hydrotalcid, Antimonoxyden,
Molybdenverbindungen und Bromverbindungen; und
zwischen 1 bis 30 Gewichtsteilen eines Pfropfpolymers, wobei das Pfropfpolymer gebildet wird, indem 10 bis 95 Gewichtsteile einer Kautschukzusammensetzung und 90 bis 5 Gewichtsteile eines auf Vinyl basierenden Monomeren polymerisiert werden;
wobei die Kautschukzusammensetzung zwischen 1 und 50 Gewichtsprozent eines Silikonkautschuks und zwischen 99 und 50 Gewichtsprozent wenigstens eines Kautschuks aus der Gruppe aus Polyalkylacrylatkautschuk und Polyalkylmethacrylatkautschuk enthält.

2. Die Zusammensetzung aus gemischtem Kunstharz nach Anspruch 1, bei der die 100 Teile eines Vinylchloridharzes wenigstens ein Mitglied der Gruppe bestehend aus einem Vinylchloridharz, einem Ethylvinylchloridcopolymer und einem Vinylchloridpfropfpolymer eines Ethylvinylacetatcopolymers enthalten.

3. Die Zusammensetzung aus gemischtem Kunstharz nach Anspruch 2, wobei:
eine Gewichtsproportion zwischen Ethylchlorid zu Vinylchlorid in dem Ethylvinylchloridcopolymer zwischen 1:99 und 10:90 beträgt; und
eine Gewichtsproportion zwischen Ethylacetat und Vinylacetat und Vinylchlorid in dem Pfropfcopolymer aus Ethylvinylchlorid und Acetatvinylchlorid zwischen 2:1:97 und 25:20:55 beträgt.

4. Die Zusammensetzung aus gemischtem Kunstharz nach Anspruch 1, wobei:
das Monomer, das mit dem Vinylchlorid copolymerisieren kann wenigstens cines von einem α-Olefin, einem Vinylester, einem Vinyläther, einem Acrylat, einem Methacrylat, einer aromatischen Vinylzusammensetzung, einer Halovinylzusammensetzung und einem N-substituierten Maleimid ist.

5. Die Zusammensetzung aus gemischtem Kunstharz nach Anspruch 1, wobei die Kautschukzusammensetzung zwischen 4 und 20 Gewichtsprozent des Silikonkautschuks und zwischen 80 und 96 Gewichtsprozent der wenigstens einen Komponente aus Polyalkylacrylatkautschuk und Polyalkylmethacrylatkautschuk enthält.

6. Die Zusammensetzung aus gemischtem Kunstharz nach Anspruch 1, wobei: der wenigstens eine Kautschuk aus der Gruppe von Polyalkylacrylatkautschuk und Polyalkylmethacrylatkautschuk Polybutylacrylatkautschuk ist.

7. Die Zusammensetzung aus gemischtem Kunstharz nach Anspruch 1, wobei die Kautschukzusamensetzung eine durchschnittliche Partikelgröße von 0,07 bis 0,8 Mikrometer aufweist.

8. Die Zusammensetzung aus gemischtem Kunstharz nach Anspruch 7, wobei sich die durchschnittliche Partikelgröße zwischen 0,07 und 0,4 Mikrometer bewegt.

9. Die Zusammensetzung aus gemischtem Kunstharz nach Anspruch 1, wobei der Chlorgehalt des Vinylchloridharzes zwischen 30 und 71 Gewichtsprozent liegt.

10. Die Zusammensetzung aus gemischtem Kunstharz nach Anspruch 1, wobei das auf Vinyl basierende Monomer wenigstens ein Mitglied der Gruppe aus Alkyacrylat, Alkylmethacrylat; Acrylnitril, Methacrylnitril, α-Methylstyrol und Vinyltoluol ist.

11. Die Zusammensetzung aus gemischtem Kunstharz nach Anspruch 10, wobei das Alkylacrylat wenigstens ein Mitglied der Gruppe aus Methylacrylat, Äthylacrylat, Butylacrylat und 2-Äthylhexylacrylat ist; und
das Alkylmethacrylat wenigstens ein Mitglied aus der Gruppe aus Methylmethacrylat; Athylmethacrylat, 2-Äthylhexylmehtacrylat und dergleichen ist.

12. Die Zusammensetzung aus gemischtem Kunstharz nach Anspruch 10, wobei das auf Vinyl basierende Monomer Methlymethacrylat ist.

13. Die Zusammensetzung aus gemischtem Kunstharz nach Anspruch 1, wobei die Kautschukzusammensetzung eine Gelfraktion von wenigstens 80 Gewichtsprozent besitzt.

14. Die Zusammensetzung aus gemischtem Kunstharz nach Anspruch 1, weiter bestehend aus:
zwischen 1 und 40 Gewichtsteilen einer Mischung aus Ammoniumpolyphosphat gemäß Formel I und Tris(2-hydroxyethyl)isocyanurat gemäß Formel II:
(NH₄PO₃) (I)
wobei n von (etwa) 800 bis (etwa) 2000 reicht und 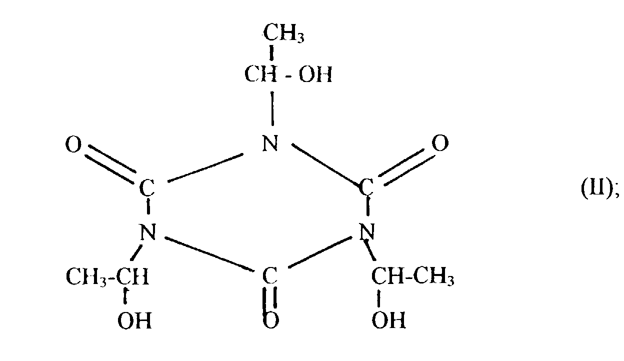 und eine Gewichtsproportion zwischen dem Ammoniumpolyphophat und dem Trisisocyanurat in der Mischung zwischen 1:4 und 4:1 beträgt.

15. Dic Zusammensetzung aus gemischtem Kunstharz nach Anspruch 1, weiter bestehend aus einem Kupplungsmittel für Titan, wobei das Kupplungsmittel für Titan ein Mitglied der Gruppe aus Isopropyltri(istearoyl)titanat, Isopropyltris(dioctylpyrophosphat)titanat, Isopropyltri(N-aminoethyl)titanat; Tetraoctylbis(ditridecylphophid)titanat, Tetra-2,2-diallyloxymethyl-1-butylbis(ditridecyl)phosphittitanat, bis(dioctylpyrophophat)ethylentitanat, Isopropyltrioctyltitanat, Isopropyldimethacrylisostearoyltitanat, Isopropyltridecylbenzol-sulfonyltitanat, Isopropylisosearoyldiacryltitanat, Isopropyltri(dioctylphosphat)titanat, Isopropyltricumylphenyltitanat, Isopropyltri(N-ethyldiamino)ethyltitanat, Tetraisopropylbis(dioctylphophit)titanat, Isopropyl(4-amino)benzolsulfonyldie(dodecyl)benzolsulfonyltitanat, Alkoxytriacryltitanat, Alkoxytrimethacryltitanat, Neopentyl(diallyl)oxytrineodecanoyltitanat, Neopentyl(diallyl)oxytri(dodecyl)benzol-sulfonyltitanat, Neopentyl(diallyl)oxytri(dioctyl)phosphattitanat, Neopentyl(diallyl)oxytri(dioctyl)pyrophosphattitanat, Neopentyl(diallyl)oxytri(N-ethylenamino)ethyltitanat, Neopentyl(diallyl)oxytri(m-amino)phenyltitanat, und Neopentyl(allyl)oxytrihydroxycaproyltitanat ist.

16. Die Zusammensetzung aus gemischtem Kunstharz nach Anspruch 1, weiter beinhaltend: zwischen 0,1 und 8 Gewichtsprozent eines Kupplungsmittels für Titan gemäß Formel III: 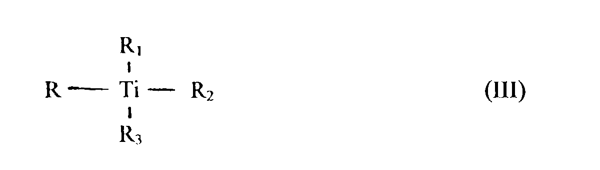 wobei
R wenigstens ein Mitglied aus der Gruppe einer Neopentyl(diallyl)oxygruppe, einer Isopropylgruppe und einer Alkoxygruppe ist;
und R1, R2, R3 entweder identisch oder verschieden sind und wenigstens aus einem Mitglied aus einer Dioctylphosphatgruppe, einer Dioctylpyrophosphatgruppe, einer N-ethylendiaminoethylgruppe, einer m-aminophenylgruppe, einer Hydroxycaproylgruppe, einer Acrylgruppe, ciner Mehtacrylgruppe, einer Dodecylbenzolsulfonylgruppe oder einer Stearylgruppe bestehen.

17. Die Zusammensetzung aus gemischtem Kunstharz nach Anspruch 16, wobei das Kupplungsmittel für Titan zwischen 0,5 und 2 Gewichtsteilen liegt.

18. Eine Zusammensetzung aus gemischtem Kunstharz bestehend aus:
100 Gewichtsteilen eines Vinylchloridharzes mit einem Chlorgehalt von zwischen 50 und 73 Gewichtsprozent;
wobei das Vinylchloridharz wenigstens aus einem Mitglied der Gruppe aus Vinylchloridharz, einem Copolymer aus einem Vinylchlorid und einem Monomeren, das mit dem Vinylchlorid copolymerisieren kann und einem Pfropfpolymer besteht, das aus einem Polymer besteht, bei dem das Vinylchlorid pfropfpolymerisiert ist;
zwischen 5 und 12 Gewichtsteilen wenigstens eines flammhemmenden Mittels aus der gruppe bestehend aus Magnesiumhydroxyd; Hydrotalcid, Antimoniumoxyden;
Molybdenverbindungen und Bromverbindungen;
zwischen 1 und 30 Gewichtsteilen eines Pfropfpolymers, wobei das Pfropfpolymer gebildet wird, indem zwischen 10 und 95 Gewichtsteile einer Kautschukverbindung und 90 bis 5 Gewichtsteile eines auf Vinyl basierenden Monomeren polymerisiert werden;
wobei die Kautschukzusammensetzung zwischen 1 und 50 Gewichtsprozent eines Silikonkautschuks und zwischen 99 und 50 Gewichtsprozent eines Kautschuks enthält, der aus der Gruppe bestehend aus Polyalkylacrylatkautschuk und Polyalkylmethacrylatkautschuk ausgewählt ist; und
nicht mehr als 30 Gewichtsteilen einer Druckregelsubstanz, ausgewählt aus der Gruppe aus chloriertem Polyethylen mit einem Chlorierungsgrad von zwischen 25 und 45 Gewichtsprozent, einem MBS-Harz, einem ABS-Harz, einem NBR, einer auf Acryl basierenden Druckregelsubstanz, einem Ethylvinylacetatcopolymer, einem Ethylvinylacetatkohlenstoffmonoxydcopolymer, einem Ethylalkylacrylatkohlenstoffmonoxydcopolymer, und einem Ethylalkylmethacrylatkohlenstoffmonoxydcopolymer.

19. Die Zusammensetzung aus gemischtem Kunstharz nach Anspruch 18, wobei das chlorierte Polyethylen ein durchschnittliches Molekulargewicht von 50.000 bis 400.000 aufweist.

20. Die Zusammensetzung aus gemischtem Kunstharz nach Anspruch 18, wobei der Chlorierungsgrad des chlorierten Polyethylcns zwischen 30 und 40 gewichtsprozent liegt.

21. Die Zusammensetzung aus gemischtem Kunstharz nach Anspruch 18, wobei die 100 Gewichtsteile des Vinylchloridharzes wenigstens ein Mitglied der Gruppe aus Vinylchloridharz, Ethylvinylchloridcopolymer und Vinylchloridpfropfpolymer eines Ethylvinylacetatcopolymers beinhalten.

22. Die Zusammensetzung aus gemischtem Kunstharz nach Anspruch 18, wobei: die Gewichtsproportion zwischen Ethylchlorid und Vinylchlorid in dem Ethyelvinylchloridcopolymer zwiscben 1:99 und 10:90 beträgt; und
die Gewichtsproportion Ethylacetat und Vinylacetat und Vinylchlorid in dem Ethylvinylacetatvinylchloridpfropfcopolymer zwischen 2;1:97 und 25:20:55 beträgt.

23. Produkt bestehend aus einer geformten Masse der gemischten Kunstharzzusammensetzung gemäß Anspruch 1.

24. Produkt nach Anspruch 23, wobei die geformte Masse eine Flugzeugkomponente ist.

25. Produkt bestehend aus einer geformten Masse der gemischten Kunstharzzusammensetzung nach Anspruch 18.

26. Produkte nach Anspruch 25, wobei die geformte Masse eine Flugzeugkomponente ist

## Revendications

1. Composition mélangée d'une résine à base de chlorure de polyvinyle comprenant : 100 parties en poids d'une résine de chlorure de vinyle ayant une teneur en chlore comprise entre 50 et 73 pour cent en poids; ladite résine de chlorure de vinyle étant constituée d'au moins un élément choisi parmi le groupe comprenant une résine de chlorure de vinyle, un copolymère formé d'un chlorure de vinyle et d'un monomère susceptible de se copolymériser avec ledit chlorure de vinyle, et un polymère greffé formé d'un polymère dans lequel ledit chlorure de vinyle est polymérisé greffé ;
de 5 à 120 parties en poids d'au moins un agent retardateur de flamme choisi parmi le groupe comprenant l'hydroxyde de magnésium, l'hydrotalcite, des oxydes d'antimoine, des composés de molybdène et des composés de brome; et
de 1 à 30 parties en poids d'un polymère greffé, dans lequel ledit polymère greffé est formé par polymérisation de 10 à 95 parties en poids d'un caoutchouc composite et de 90 à 5 parties en poids d'un monomère à base de vinyle;
ledit caoutchouc composite contenant de 1 à 50 pour cent en poids d'un caoutchouc polyorganosiloxane et de 99 à 50 pour cent en poids d'au moins un caoutchouc choisi parmi le groupe comprenant un caoutchouc acrylate polyalkyle et un caoutchouc méthacrylate polyalkyle.

2. Composition de résine mélangée selon la revendication 1, dans laquelle lesdites 100 parties de résine de chlorure de vinyle comprennent au moins un élément choisi parmi le groupe comprenant une résine de chlorure de vinyle, un copolymère de chlorure d'éthylène-vinyle et un polymère greffé de chlorure de vinyle d'un copolymère d'acétate d'éthylène-vinyle.

3. Composition de résine mélangée selon la revendication 2, dans laquelle :
le rapport en poids d'éthylène au chlorure de vinyle dans ledit copolymère de chlorure d'éthylène-vinyle est compris entre 1/99 et 10/90 ; elle rapport de poids d'éthylène à l'acétate de vinyle et au chlorure de vinyle dans ledit copolymère greffé de chlorure d'acétate-vinyle éthylène-vinyle est compris entre 2/1/97 et 25/20/55.

4. Composition de résine mélangée selon la revendication 1, dans laquelle :
ledit monomère susceptible de copolymériser avec ledit chlorure de vinyle comprend au moins une oléfine α, un ester-vinyle, un éther-vinyle, un acrylate, un méthacrylate, un composé vinyle aromatique, un composé halovinyle, un maléimide N-substitué.

5. Composition de résine mélangée selon la revendication 1, dans laquelle ledit caoutchouc composite contient de 4 à 20 pour cent en poids dudit caoutchouc polyorganosiloxane et de 80 à 96 pour cent en poids d'au moins l'un dudit caoutchouc acrylate polyalkyle et dudit caoutchouc méthacrylate polyalkyle.

6. Composition de résine mélangée selon la revendication 1, dans laquelle :
ledit au moins un caoutchouc choisi parmi le groupe comprenant le caoutchouc acrylate polyalkyle et le caoutchouc méthacrylate polyalkyle est le caoutchouc acrylate polybutyle.

7. Composition de résine mélangée selon la revendication 1, dans laquelle ledit caoutchouc composite a une dimension particulaire moyenne comprise entre 0,07 et 0,8 micron.

8. Composition de résine mélangée selon la revendication 7, dans laquelle ladite dimension particulaire moyenne se situe entre 0,07 et 0,4 micron.

9. Composition de résine mélangée selon la revendication 1, dans laquelle :
ladite teneur en chlore de ladite résine de chlorure de vinyle est comprise entre 30 et 71 pour cent en poids.

10. Composition de résine mélangée selon la revendication 1, dans laquelle ledit monomère à base de vinyle est au moins un élément choisi parmi le groupe comprenant l'acrylate d'alkyle, le méthacrylate d'alkyle, l'acrylonitrile, le méthacrylonitrile, le styrène d'a-méthyle et le toluène de vinyle.

11. Composition de résine mélangée selon la revendication 10, dans laquelle ledit acrylate d'alkyle est au moins un élément choisi parmi le groupe comprenant l'acrylate de méthyle, l'acrylate d'éthyle, l'acrylate de butyle, et l'acrylate de 2-éthyl hexyle; et ledit méthacrylate d'alkyle est au moins un élément choisi parmi le groupe comprenant le méthacrylate de méthyle, le méthacrylate d'éthyle, le méthacrylate de 2-éthyl hexyle et analogue.

12. Composition de résine mélangée selon la revendication 10, dans laquelle :
ledit monomère à base de vinyle est le méthacrylate de méthyle.

13. Composition de résine mélangée selon la revendication 1, dans laquelle :
ledit caoutchouc composite a une fraction gel d'au moins 80 pour cent en poids.

14. Composition de résine mélangée selon la revendication 1, comprenant en outre :
de 1 à 40 parties en poids d'un mélange contenant un polyphosphate d'ammonium représenté par la formule I et du tris (2-hydroxyéthyl) isocyanurate représenté par la formule II:
(NH₄PO₃)n (I)
dans laquelle n se situe entre (environ) 800 et (environ) 2000 et 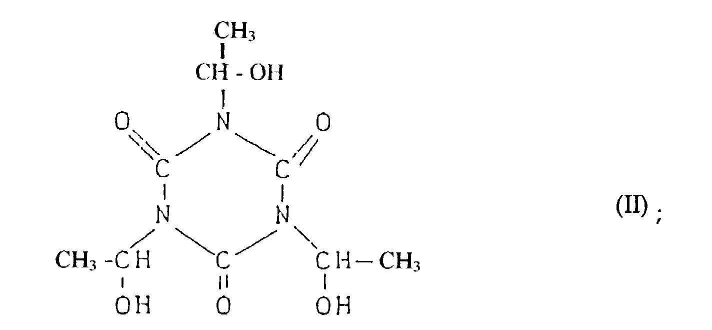 et le rapport pondéral dudit polyphosphate d'ammonium audit tris isocyanurate dans ledit mélange se situe entre 1/4 et 4/1.

15. Composition de résine mélangée selon la revendication 1, comprenant en outre un agent de couplage du titane, ledit agent de couplage du titane étant un élément choisi parmi le groupe comprenant un isopropyl tri (istéaroyl) titanate, un isopropyl tris (dioctyl pyrophosphate) titanate, un isopropyl tri (N-aminoéthyl) titanate, un tétra-octyl bis (ditridécyl phosphure) titanate, un tétra 2,2-diallyloxyméthyl-1-butyl bis (ditridécyl) phosphite titanate, un bis (dioctyl pyrophosphate) éthylène titanate, un isopropyle trioctyle titanate, un isopropyle diméthacryle isostéaroyl titanate, un isopropyl tridécyl benzène-sulfonyl titanate, un isopropyle isoséaroyl diacryl titanate, un isopropyl tri (dioctyl phosphate) titanate, an isopropyl tricymyl phényl titanate, un isopropyl tri (N-éthylène diamino) éthyl titanate, un tétraisopropyl bis (dioctyl phosphite) titanate, un isopropyl (4-amino) benzène sylfonyl di (dodécyl) benzène-sulfonyl titanate, un alkooxytriacryl titanate, un alkoxytriméthacryl titanate, un néopentyl (diallyl) oxytrinéodécanoyl titanate, un néopentyl (diallyl) oxytri (dodécyl) benzène-sulfonyl titanate, un néopentyle (diallyl) oxytri (dioctyl) phosphate titanate, un néopentyl (diallyl) oxytri (dioctyl)pyrophosphate titanate, un néopentyl (diallyl) oxytri (N-éthylène amino) éthyl titanate, un néopentyl (diallyl) oxytri (m-amino) phényl titanate, et un néopentyl (allyl) oxytrihydroxycaproyl titanate.

16. Composition de résine mélangée selon la revendication 1, comprenant en outre :
de 0,1 à 8 parties en poids d'un agent de couplage du titane représenté par la formule III: 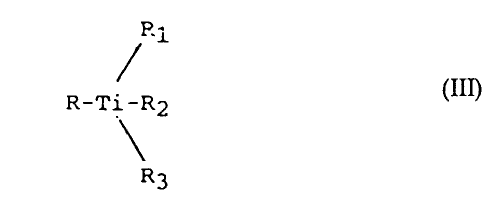 dans laquelle
R est au moins un élément choisi parmi le groupe comprenant un groupe néopentyl (diallyl) oxy, un groupe isopropyle et un groupe alkoxy ;
R1, R2 et R3 sont soit identiques, soit différents, et comprennent au moins un groupe dioctyl phosphate, un groupe dioctyl pyrophosphate, un groupe N-éthylène diaminoéthyle, un groupe m-aminophényle, un groupe hydroxy caproyle, un groupe acrylique, une groupe méthacrylique, un groupe dodécyl benzène-sulfonyle ou un groupe stéaryle.

17. Composition de résine mélangée selon la revendication 16, dans laquelle ledit agent de couplage du titane se trouve dans une proportion de 0,5 à 2 parties en poids.

18. Composition mélangée de résine à base de chlorure de polyvinyle comprenant:
100 parties en poids de résine de chlorure de vinyle ayant une teneur en chlore comprise entre environ 50 et environ 73 % en poids,
ladite résine de chlorure de vinyle est constituée par au moins un élément choisi parmi le groupe comprenant une résine de chlorure de vinyle, un copolymère formé d'un chlorure de vinyle et d'un monomère susceptible de copolymériser avec ledit chlorure de vinyle, et un polymère greffé formé à partir d'un polymère dans lequel ledit chlorure de vinyle est polymérisé greffé ;
de 5 à 12 parties en poids d'au moins un agent retardateur de flamme choisi parmi le groupe comprenant l'hydroxyde de magnésium, l'hydrotalcite, des oxydes d'antimoine, des composés du molybdène et des composés du brome ;
de 1 à 30 parties en poids d'un polymère greffé, dans lequel ledit polymère greffé est formé par polymérisation de 10 à 95 parties en poids d'un caoutchouc composite et de 90 à 5 parties en poids d'un monomère à base de vinyle ;
ledit caoutchouc composite contenant de 1 à 50 pour cent en poids d'un caoutchouc polyorganosiloxane et de 99 à 50 pour cent en poids d'au moins un caoutchouc choisi parmi le groupe comprenant un caoutchouc d'acrylate de polyalkyle et un caoutchouc de méthacrylate de polyalkyle ; et
pas plus de 30 parties en poids d'au moins un modifieur d'impact choisi parmi le groupe comprenant un polyéthylène chloré ayant un degré de chloration compris entre 25 et 45 pour cent en poids, une résine MBS, une résine ABS, un NBR, un modifieur d'impact à base d'acrylate, un copolymère d'acétate d'éthylène-vinyle, un copolymère monoxyde d'éthylène-vinyle et d'acétate-carbone, un copolymère monoxyde d'éthylène-alkyle et d'acrylate-carbone et un copolymère monoxyde d'éthylène-alkyle et de méthacrylate-carbone.

19. Composition de résine mélangée selon la revendication 18, dans laquelle ledit polyéthylène chloré a un poids moléculaire moyen compris entre 50 000 et 400 000.

20. Composition de résine mélangée selon la revendication 18, dans laquelle ledit degré de chloration dudit polyéthylène chloré est compris entre 30 et 40 pour cent en poids.

21. Composition de résine mélangée selon la revendication 18, dans laquelle lesdites 100 parties de résine de chlorure de vinyle comprennent au moins un élément choisi parmi le groupe comprenant une résine de chlorure de vinyle, un copolymère de chlorure d'éthylène-vinyle, et un polymère greffé de chlorure de vinyle d'un copolymère d'acétate d'éthylène-vinyle.

22. Composition de résine mélangée selon la revendication 18, dans laquelle :
le rapport pondéral de l'éthylène au chlorure de vinyle dans ledit copolymère de chlorure d'éthylène-vinyle se situe entre 1/99 et 10/90 ; et le rapport pondéral de l'éthylène à l'acétate de vinyle et au chlorure de vinyle dans ledit copolymère greffé de chlorure d'acétate-vinyle et d'éthylène-vinyle est compris entre 2/1/97 et 25/20/55.

23. Article comprenant une masse conformée au moyen d'une composition de résine à base de chlorure de vinyle mélangée selon la revendication 12.

24. Article tel que décrit dans la revendication 23, dans lequel la masse conformée est un composant d'un avion.

25. Article comprenant une masse conformée d'une composition mélangée de résine à base de chlorure de vinyle selon la revendication 18.

26. Article tel que décrit dans la revendication 25, dans lequel ladite masse conformée est un composant d'un avion.
